# EUROPÄISCHE PATENTANMELDUNG

(11) **EP 3 650 111 A1**
(43) Veröffentlichungstag der Anmeldung: **13.05.2020**
(21) Anmeldenummer: 19201999.0
(22) Anmeldetag: 08.10.2019
(51) Int. Cl.: B01D 61/14, B01D 61/22, B01D 65/02, C12H 1/07

(54) **RÜCKSPÜLVERFAHREN UND FILTERVORRICHTUNG FÜR DIE CROSSFLOW-FILTRATION**

(30) Priorität: 09.11.2018 DE 102018219186
(71) Anmelder: Krones AG, 93073 Neutraubling (DE)
(72) Erfinder: ZACHARIAS, Joerg, 93073 Neutraubling (DE); FRAMMELSBERGER, Maximilian, 93073 Neutraubling (DE); NITSCHE, Daniel, 93073 Neutraubling (DE)
(74) Vertreter: Grünecker Patent- und Rechtsanwälte PartG mbB

(57) **Zusammenfassung**

Die Erfindung betrifft ein Rückspülverfahren für eine Filtervorrichtung, sowie eine Filtereinrichtung insbesondere zur Bierfiltration, mit einer oder mehreren Moduleinheiten, wobei eine Moduleinheit mindestens ein Modulpaket mit mehreren Modulen, insbesondere mindestens drei Modulen zur Crossflow- Filtration umfasst, wobei innerhalb einer Moduleinheit mindestens ein Modul mit in dieser Moduleinheit erzeugtem Filtrat rückgespült wird, und während des Rückspülens zumindest zeitweise die Anzahl der rückgespülten Module kleiner ist als die Anzahl der Module, die das Filtrat produziert haben.

## Beschreibung

Die Erfindung betrifft ein Rückspülverfahren sowie eine Filtervorrichtung zum Durchführen des Verfahrens gemäß dem Oberbegriff der Patentansprüche 1 und 14.

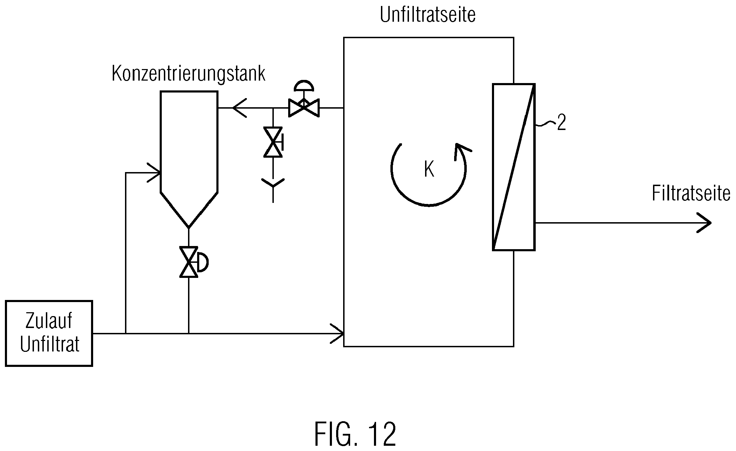

Die Membranfiltration (Mikrofiltration) von Bier zur Bierklärung ist seit einigen Jahren eine zunehmend akzeptierte Technologie. Dabei wird bevorzugt die Crossflow-Methode verwendet, bei der das Unfiltrat, hier das unfiltrierte Bier, entlang einer Membrane durch das Crossflow-Filtermodul geführt wird, wie beispielsweise aus Fig. 12 hervorgeht. Bei der Filtration konzentrieren sich dabei zurückgehaltene Bestandteile (z. B. Hefe bzw. Mischung aus verschiedenen Proteinen und Polysacchariden etc.) auf der Unfiltratseite (Retentatseite) auf. Bei gleichbleibender Unfiltratkonzentration und gleichbleibender abgeführter Filtratmenge steigt die Konzentration in Abhängigkeit der Retentatumlaufzeit. Je nach Verfahren können die zurück gehaltenen hochkonzentrierten Bestandteile entweder völlig im Kreislauf K bis zum Filtratende verbleiben oder sie werden teilweise in zusätzlich vorgesehene Aufkonzentriertanks abgezogen und gezielt später zu dosiert, wie beispielsweise aus Fig. 12 hervorgeht. Bei dem Aufkonzentriertank kann es sich beispielsweise um den Unfiltratpuffertank handeln.

All diese Methoden haben gemeinsam, dass sie über den Verlauf der Filtration das Unfiltrat/Retentat aufkonzentrieren, sodass die Membrane der Module mit einer Deckschicht belegt werden. Einige Bestandteile werden zudem in den Poren der Membran adsorbiert, was dazu führt, dass die Membrane an der Oberfläche und bis ins Innere hinein verschmutzen. Durch die Verschmutzung der Membrane steigt der Transmembrandruck, wobei es eine Grenze gibt, bei der die Filtration beendet und das Konzentrat entsorgt (beispielhaft in einen Althefetank) werden muss. Im Anschluss gibt es dann beispielsweise die Möglichkeit, die Filtration erneut zu starten, rückzuspülen und dann weiter zu filtrieren oder eine Komplettreinigung/CIP-Reinigung (Cleaning in Place) durchzuführen.

Abhängig ist dies vom Verschmutzungszustand der Membran sowie der grundsätzlichen Reinigungsstrategie. Daher wird in der Regel bei Erreichen/Überschreiten eines vorab festgelegten mittleren Transmembrandruck (TMD) eine Rückspülung oder ein Zwischenreinigungsschritt durchgeführt oder eine Komplettreinigung/CIP-Reinigung. Die Reinigung wird dann in der Regel mit diversen Reinigungsmedien wie Wasser, Laugen, Säuren und Additiven durchgeführt. Es ist wünschenswert, die Standzeit der Module zu verlängern, d. h. die Reinigungsintervalle zu vergrößern und die Filtration möglichst effizient durchzuführen, da Produktionsausfälle in Folge einer Reinigung mit erheblichen Kosten verbunden sind.

Es hat sich gerade herausgestellt, dass beim Rückspülen von Modulen ein erhöhter Rückspüldruck durch das Modul notwendig ist (zum Beispiel der 2- bis 10-fache Volumenstrom). Möchte man nun mit Filtrat aus einem anderen Modul rückspülen, so müsste auch der Volumenstrom während der Filtration durch dieses Modul erhöht werden. Dies bringt jedoch die Gefahr mit sich, dass die Membran des Moduls beschädigt wird oder sie zu stark irreversibel verschmutzt. Möchte man nun den Fluss zum Rückspülen erhöhen, so ist es notwendig extra Pumpen vorzusehen, oder aber Filtrat aus einem Puffertank in Kombination mit einer Pumpe zu verwenden.

Eine solche Lösung ist jedoch kostenintensiv. Lösungen, die über Puffertank oder andere potenziell belastete lange Leitungssysteme laufen, tragen darüber hinaus das Risiko, dass sich dort ein Stapeln bzw. Ablagern von Partikeln abspielt, bzw. es zu einer Verkeimung kommen kann. Bei vielen dieser Anwendungen wird das Rückspülmedium (CIP Medium aus einem jeweiligen Neuansatz) nach dem Rückspülen verworfen und über den Gully entsorgt.

Hiervon ausgehend liegt der vorliegenden Erfindung die Aufgabe zugrunde, ein Rückspülverfahren bereitzustellen, mit dem auf einfache, hygienische Art und Weise Module effizient rückspülbar sind sowie eine Filtervorrichtung zum Durchführen des Verfahrens.

Erfindungsgemäß wird diese Aufgabe durch die Merkmale der Ansprüche 1 und 14 gelöst.

Das erfindungsgemäße Rückspülverfahren für eine Filtervorrichtung, insbesondere zur Bierfiltration weist eine oder mehrere Moduleinheiten (mindestens 2) auf, wobei eine Moduleinheit mindestens ein Modulpaket aufweist, das mehrere (mindestens 2), insbesondere mindestens drei Module zur Crossflow-Filtration umfasst. Innerhalb einer Moduleinheit wird mindestens ein Modul mit in dieser Moduleinheit erzeugtem Filtrat rückgespült, wobei die Anzahl der rückgespülten Module zumindest zeitweise kleiner ist als die Anzahl der Module, die das Filtrat produziert haben.

Somit kann der Fluss durch das rückzuspülende Modul auf einfache Art und Weise erhöht werden, ohne dass der Volumenstrom über eine Pumpe erhöht werden muss und ohne, dass ein filtrierendes Modul durch einen zu hohen Fluss beschädigt wird. Dadurch, dass die Module mit Filtrat rückgespült werden, wird auf der hygienisch sensiblen Seite immer sauberes, mikrobiologisch und Partikel unbelastetes Medium verwendet. So kann keine Verschleppung auf die Filtratseite in die Hohlfasern der Module hinein erfolgen. Lösungen, die über Puffertank oder andere potenziell belastete lange Leitungssysteme laufen, tragen das Risiko, dass sich dort ein Stapeln bzw. Ablagern von Partikeln abspielt, bzw. es zu einer Verkeimung kommen kann.

Unter Modulpaket versteht man nebeneinander angeordnete Module, die hintereinander in Reihe von Unfiltrat durchströmbar sind, wobei das Unfiltrat im Kreislauf über eine Pumpe durch die Module führbar ist.

Unter Rückspülen versteht man, dass ein Rückspülmedium gegen Filtrationsrichtung, d.h. von der Filtratseite durch die Membran zur Unfiltratseite geführt wird. Als Rückspülmedium kann beispielsweise Bier, Wasser (insbsondere entgastes Wasser), oder Bier und Wasser (insbsondere entgastes Wasser) bzw. CIP Flüssigkeit wie zum Beispiel Lauge (eventuell mit Additive), Säuren (eventuell mit Additive), additive, Enzyme verwendet werden. Auch ein Gas (wie etwa beispielsweise Kohlendioxid oder Stickstoff) ist denkbar. Das Rückspülen kann, wenn ein geeignetes Rückspülmedium, z.B. Bier verwendet wird, während des eigentlichen Filtrationsprozesses oder einer Unterbrechung vor der nächsten Zwischenreinigung oder Hauptreinigung stattfinden. Das Rückspülen kann aber auch während einer Zwischen- oder Hauptreinigung stattfinden.

Die Moduleinheit kann mindestens zwei Modulpakete aufweisen, wobei vorzugsweise entweder
- die Module eines Modulpakets mit Rückspülfiltrat zurückgespült werden, das in einem anderen Modulpaket der Moduleinheit erzeugt wurde oder
- die Module eines Modulpakets mit Filtrat zurückgespült werden, das in einem anderen und dem gleichen Modulpaket der Moduleinheit erzeugt wurde oder
- die Module eines Modulpakets mit Filtrat zurückgespült werden, das im gleichen Modulpaket erzeugt wurde.

Somit kann die Anzahl der Module, die rückgespült werden und die filtrieren in einer Moduleinheit beliebig eingestellt werden. Zum Einstellen des Volumenstroms des Rückspülfiltrats durch ein rückzuspülendes Modul ist eine Steuereinrichtung vorgesehen, die in Abhängigkeit eines ermittelten oder eingegebenen Rückspülvolumenstroms die Ventile entsprechend ansteuert.

Gemäß einem bevorzugten Ausführungsbeispiel kann das in den filtrierenden Modulen erzeugte Rückspülfiltrat dem mindestens einem rückzuspülenden Modul über einen Filtratanschluss zugeführt werden und über einen Unfiltratanschluss abgeleitet werden und dann im Kreislauf wieder den filtrierenden Modulen rückgeführt werden.

Somit muss das Rückspülfiltrat nicht verworfen werden, so dass es zu einer Medien- und Zeiteinsparung kommt.

Das Rückspülfiltrat mehrerer filtrierender Module kann in jeweilige Filtratleitungen geleitet werden und dann in einer Leitung zusammengeführt werden um dem rückzuspülenden Modul zugeführt zu werden, wodurch sich der Volumenstrom wesentlich erhöht und bestehende Leitungen verwendet werden.

Gemäß einem bevorzugten Ausführungsbeispiel weisen die Modulpakete einer Moduleinheit eine gemeinsame Unfiltratpumpe auf, über die bei der Filtration Unfiltrat zu den Unfiltratanschlüssen der Module gepumpt wird, und die auch das Rückspülfiltrat im Kreislauf von dem mindestens einem rückzuspülenden Modul zu den filtrierenden Modulen pumpt, wobei insbesondere keine weitere Pumpe vorgesehen ist um einen Kreislauf zur Rückspülung am Laufen zu halten.

Somit kann mit nur einer Pumpe, die zur Filtration dient, auch die Rückspülung realisiert werden.

Dabei kann zwischen den rückzuspülenden Modulen und den filtrierenden Modulen in der Unfiltratleitung ein Puffertank vorgesehen sein, in welchem beim Rückspülen erzeugtes Unfiltrat gepuffert wird. Somit kann, wenn beim Rückspülen ein erhöhtes Volumen an Rückspülfiltrat anfällt dieses zwischengepuffert werden.

Vorteilhafterweise ist der Druck am Ausgang des rückzuspülenden Moduls kleiner als auf dessen Eingangsseite, d.h. am Filtratanschluss. Somit kann das Rückspülfiltrat über den Unfiltratanschluss des Moduls ablaufen ohne dass eine weitere Pumpe notwendig ist.

Gemäß einer bevorzugten Ausführungsform sind in einem Modulpaket mehrere Module parallel zueinander angeordnet (können aber wie nachfolgend erläutert in Reihe geschaltet werden), wobei die Module einen ersten Unfiltratanschluss an einem ersten Ende des Moduls aufweisen und einen zweiten Unfiltratanschluss an der gegenüberliegenden Seite des Moduls, sowie mindestens einen Filtratablauf (vorzugsweise zwei), wobei während eines Rückspülvorgangs mindestens ein Ventil vor den Unfiltratanschlüssen des rückzuspülenden Moduls geschlossen wird, sodass kein Unfiltrat von der Unfiltratpumpe zu den Unfiltratanschlüssen gepumpt werden kann, und vorzugsweise zumindest ein Ventil nach den Unfiltratanschlüssen der Module, die das Rückspülfiltrat filtrieren, geschlossen ist, sodass kein Unfiltrat von den filtrierenden Modulen in Richtung Pumpe fließen kann - wobei zumindest das Ventil geschlossen ist, das auf der Seite liegt auf der im Crossflow das Unfiltrat das filtrierende Modul verlassen würde .Im Dead End Modus sind alle Unfiltratablaufventile des Moduls geschlossen.

Somit ist sichergestellt, dass die rückzuspülenden Module nicht in Filtrationsrichtung betrieben werden und die durchströmten filtrierenden Module kein Unfiltrat in Richtung Pumpe leiten, so dass der Druck im Leitungssystem der Unfiltratleitung vor der Pumpe niedrig bleibt und somit auch der Druck am Unfiltratanschluss der rückzuspülenden Modulen niedrig ist, damit ein Rückspülen mit nur einer Pumpe und hohem Fluss möglich ist. Das Unfiltat der filtrierenden Module kann dann z.B. über die CIP Anschlüsse der Module oder gesonderte Anschlüsse oder z.B. auch den Unfiltratanschluss abgeleitet werden. Es kann auch über eine Unfiltratleitung wieder zur Unfiltratpumpe geleitet werden um im Kreislauf erneut verwendet zu werden. Es ist auch möglich, dass das Unfiltrat in einen Unfiltrattank geleitet wird.

Weiter besteht die Möglichkeit, dass die filtrierenden Module im Dead End Modus betrieben werden, d.h., dass das Unfiltrat nicht abgeleitet, sondern bei geschlossenem Unfiltratablauf, auf Anschlag gefahren wird. Dies ist besonders bei kleineren Filtermengen und/oder bei geringer verbleibender Partikelbeladung auf der Unfiltratseite vorteilhaft.

Die Module können also einen ersten und zweiten Unfiltratanschluss aufweisen und die Unfiltratanschlüsse, insbesondere über einen Kopfraum der Module über gemeinsame Leitungsabschnitte der Unfiltratleitung miteinander verbunden sein, wobei ihr jeweils erster Unfiltratanschluss mit einem ersten gemeinsamen Leitungsabschnitt einer Unfiltratleitung in Verbindung steht und ihr jeweils zweiter Unfiltratanschluss mit einem zweiten gemeinsamen Leitungsabschnitt der Unfiltratleitung in Verbindung steht, wobei jeweils vor und nach den jeweiligen ersten und zweiten Unfiltratanschlüssen Ventileinrichtungen angeordnet sind, die derart schaltbar sind, dass das jeweilige Modul vom ersten oder zweiten Unfiltratanschluss aus mit Unfiltrat durchströmbar ist. Dabei stehen der erste und zweite Leitungsabschnitt der Unfiltratleitung in Verbindung, um eine Ringleitung zu bilden. Die Ringleitung ist mit einem Leitungsabschnitt verbunden, der Unfiltrat von der Unfiltratpumpe zuführt und einem Leitungsabschnitt der Unfiltrat in Richtung Unfiltratpumpe fördern kann.

Dies ermöglicht, dass die Ventileinrichtungen der Ventilanordnung derart schaltbar sind, dass die Module in Reihe betrieben werden können und insbesondere die Richtung, in der das Unfiltrat das jeweilige Modul durchströmen kann, für jedes Modul einstellbar ist. Auch eine Parallelschaltung ist möglich.

Wenn gemäß der Erfindung mehrerer Module vorgesehen sind, sind die Ventileinrichtungen derart schaltbar, dass, wenn ein Modul in einer ersten Richtung von Unfiltrat durchströmbar ist und ein nachfolgendes Modul in der zweiten Richtung, die der ersten Richtung entgegengesetzt ist, durchströmbar ist. Dies kann das unmittelbar folgende Modul sein oder ein weiter nachfolgendes. Es ist auch möglich, dass die Ventileinrichtungen derart geschaltet werden können, dass mindestens ein Modul überbrückt bzw. abgekoppelt wird, was insbesondere beim Rückspülen vorteilhaft sein kann, da zur Austragung der Beläge abgespülte Rückstände nicht durch nachfolgende Membranen geleitet werden müssen.

Gemäß einer bevorzugten Ausführungsform kann während des Rückspülen der Durchfluss durch das mindestens eine rückzuspülende Modul erhöht werden, indem die Anzahl der Module die Rückspülfiltrat erzeugen, das dem mindestens einem rückzuspülenden Modul zugeführt wird, erhöht wird oder die Anzahl der rückzuspülenden Module herabgesetzt wird. Dies kann durch eine entsprechende Schaltung der Ventile auf einfache Art und Weise realisiert werden. Somit kann der Volumenstrom zu Beginn des Rückspülen stufenweise erhöht bzw. hochgerampt werden, indem die Anzahl der filtrierenden Module z.B. von 1 auf nₐ (Anzahl der Module die Filtrieren) erhöht wird, was besonders membranschonend ist.

Es ist auch möglich, dass während des Rückspülen der Durchfluss durch das mindestens eine rückzuspülende Modul erniedrigt wird, indem die Anzahl der Module, die Rückspülfiltrat erzeugen, erniedrigt wird oder die Anzahl der rückzuspülenden Module heraufgesetzt wird. Somit kann der Volumenstrom nachdem er erhöht wurde auch wieder insbesondere stufenweise reduziert werden.

Wenn nₐ Module der Moduleinheit filtrieren, werden n_{b} Module rückgespült, wobei
nₐ,n_{b} einer ganzen Modulanzahl entspricht, und x die Gesamtanzahl der Module der Moduleinheit ist und nₖ die Anzahl der Module die abgekoppelt sind, wobei gilt n_{b} = x-nₐ-nₖ. Somit kann der Volumenstrom beliebig eingestellt werden.

Als Rückspülmedium kann zum Beispiel Bier, Wasser, Bier und Wasser oder CIP Medium oder Gas verwendet werden.

Die erfindungsgemäße Filtervorrichtung zum Durchführen des Verfahrens umfasst eine Steuereinrichtung, die die Ventileinrichtungen derart ansteuert, dass innerhalb einer Moduleinheit mindestens ein Modul mit in dieser Moduleinheit erzeugten Filtrat rückgespült wird, und während des Rückspülens zumindest zeitweise die Anzahl der rückgespülten Module kleiner ist, als die Anzahl der Module, die das Filtrat produziert haben.
Fig. 1 zeigt grob schematisch ein Ausführungsbeispiel einer Filtervorrichtung gemäß der vorliegenden Erfindung mit zwei Modulpaketen.
Fig. 2 zeigt grob schematisch eine Filtervorrichtung gemäß der vorliegenden Erfindung mit zwei Moduleinheiten, die jeweils zwei Modulpakete mit mehreren Modulen aufweisen.
Fig. 3 zeigt grob schematisch unterschiedliche mögliche Durchströmungsrichtungen durch die Module eines Modulpakets.
Fig. 4 zeigt grob schematisch ein Beispiel für das Rückspülen eines zweiten Filterpakets mit Filtrat eines ersten Filterpakets.
Fig. 5a zeigt grob schematisch das Rückspülen eines Moduls, dem das Rückspülfiltrat von unten zugeführt wird.
Fig. 5b zeigt das in Fig. 5a gezeigte Ausführungsbeispiel, wobei dem rückzuspülenden Modul das Filtrat von oben zugeführt wird
Fig. 6a zeigt grob schematisch ein Ausführungsbeispiel das dem in Figur 5a gezeigten Ausführungsbeispiel entspricht, wobei ein anderes Modul von unten rückgespült wird.
Fig. 6b zeigt das in Fig. 6a gezeigte Ausführungsbeispiel, wobei das Modul von oben rückgespielt wird
Fig. 7a zeigt grob schematisch ein Ausführungsbeispiel, das den Ausführungsbeispielen 5a bis 6b entspricht, wobei hier ein anderes Modul von unten durch zwei filtrierende Module rückgespült wird.
Fig. 7b zeigt das in Figur 7a gezeigte Ausführungsbeispiel, wobei das Filtrat dem rückzüspülenden Modul von oben zugeführt wird.
Fig. 8a zeigt grob schematisch ein Ausführungsbeispiel, wobei hier zwei Module ein Modul von unten rückspülen.
Fig. 8b zeigt das in Figur 8a gezeigte Ausführungsbeispiel, wobei hier das Modul von oben rückgespült wird
Fig.9a zeigt grob schematisch ein Ausführungsbeispiel, das den vorherigen Ausführungsbeispielen entspricht, wobei hier zwei filtrierenden Module ein weiteres Modul rückspülen
Figur 9b zeigt das in Fig.9a gezeigte Ausführungsbeispiel, wobei das Modul von oben rückgespült wird
Figur 10a zeigt das ein rückzuspülendes Modul von zwei filtrierenden Modulen rückgespült wird
Figur 10b zeigt das in Figur 10a gezeigte Ausführungsbeispiel, wobei das rückzuspülende Modul von oben rückgespült wird
Figur11a zeigt ein Beispiel bei dem ein filtrierendes Modul ein rückzuspülendes Modul rückspült.
Figur 11b zeigt ein Ausführungsbeispiel bei dem zwei filtrierende Module ein Modul rückspülen
Figur 11c zeigt ein Ausführungsbeispiel bei dem drei filtrierende Module ein Modul rückspülen
Figur 11d zeigt ein Ausführungsbeispiel bei dem vier filtrierende Module ein Modul rückspülen
Figur 11e zeigt ein Ausführungsbeispiel, bei dem fünf filtrierende Module ein Modul rückspülen.
Fig. 12 zeigt grob schematisch einen Crossflow-Filter gemäß dem Stand der Technik.
Fig. 13 zeigt ein Modulpaket mit CIP Anschlüssen gemäß der Erfindung
Fig.14 zeigt eine Ausführungsform mit Filtratpuffertank

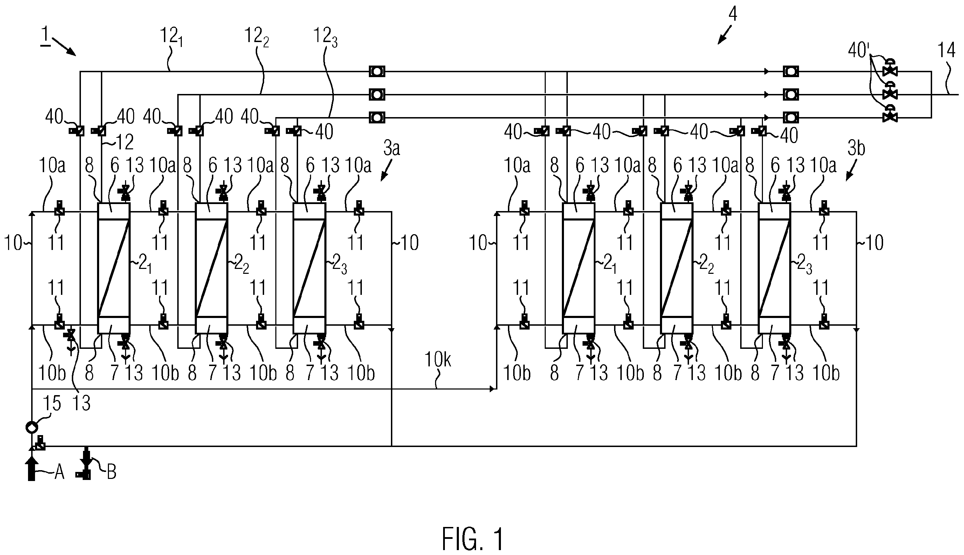

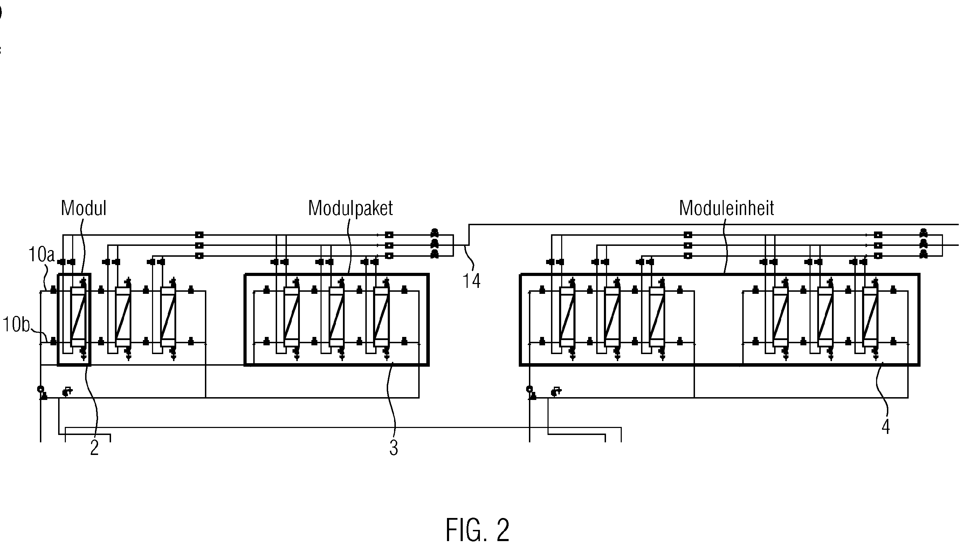

Fig. 1 zeigt grobschematisch eine Ausführungsform einer Filtervorrichtung 1 gemäß der vorliegenden Erfindung mit einer Moduleinheit 4, bestehend aus zwei Modulpaketen 3a, 3b, wobei jedes Modulpaket drei Crossflow-Module 2 umfasst. Gemäß der Erfindung kann auch nur ein Modulpaket pro Moduleinheit vorgesehen sein. Es ist auch möglich, dass mehrere Moduleinheiten wie in Fig. 2 gezeigt, vorgesehen sind.

Unter dem Ausdruck "Modul" versteht man in dieser Anmeldung ein Crossflow-Modul, das beispielsweise Kunststoffhohlfasern umfasst (oder keramische Filterkerzen mit Mikrofiltrationsporen von z. B. 0,45 µm). Ein Modul umfasst zum Beispiel eine Membrankartusche mit einer Vielzahl von Hohlfasern (beispielsweise 2.000 bis 3.000), die in das Mantelrohr der Kartusche eingepottet sind. Das Potting kann auch direkt in das Druckrohr erfolgen. Das Modul kann beispielsweise 0,5 bis 1,5 m lang sein, insbesondere 0,7 bis 1 m. Grundsätzlich sind alle gängigen Crossflow-Filtermodule für die vorliegende Erfindung geeignet, die für die Filtration von Bier insbesondere eine Porenweite in einem Bereich von 0,2 µm bis 1,2 µm, insbesondere 0,3 µm bis 0,7 µm aufweisen. Ein Modul kann beispielsweise an gegenüberliegenden Enden zwei Kopfräume aufweisen, die mit Unfiltratanschlüssen des Moduls in Verbindung stehen. Durch den jeweiligen Kopfraum kann auch eine Filtratableitung nach außen durchgeführt sein. Die Filtratableitung kann aber auch seitlich von der Membrankartusche abzweigen. Insbesondere können auch zwei Filtratableitungen vorgesehen sein.

Ein Modulpaket 3 umfasst mindestens zwei insbesondere mindestens drei Module 2.

Eine Moduleinheit 4 umfasst mindestens zwei nebeneinander angeordnete Modulpakete 3. Die Modulpakete einer Moduleinheit weisen eine gemeinsame Pumpe 15 für das Unfiltrat auf. Eine jeweilige Moduleinheit 4 steht insbesondere auf einem eigenen Rahmen.

Wie aus Fig. 1 hervorgeht, sind hier 2 Modulpakete vorgesehen, Modulpaket 3a und Modulpaket 3b. Die Module 2 weisen jeweils einen ersten Unfiltratanschluss 6, hier an der Oberseite des jeweiligen Moduls und einen zweiten Unfiltratanschluss 7 an der gegenüberliegenden Seite zum Beispiel im jeweiligen Kopfraum des Moduls auf. Weiter weisen die Module zumindest einen Filtratablauf, hier zwei Filtratabläufe, 8 auf, die in jeweilige Filtratablaufleitungen 12₁, 12₂, 12₃ münden, wobei auch die Filtratabläufe 8 der Module 2 des zweiten Modulpakets 3b jeweils in die entsprechende Filtratleitung 12₁, 12₂, 12₃ münden, d. h., dass der jeweilige mindestens eine Filtratablauf 8 der jeweiligen Module in eine jeweilige Filtratablaufleitung 12 mündet, wobei, wenn n Module in einem Modulpaket 3a, 3b vorgesehen sind, der n-te Filtratablauf eines n-ten Moduls des ersten Modulpakets 3a und der n-te Filtratablauf 8 eines zweiten Modulpakets 3b in eine gemeinsame n-te Filtratableitung 12ₙ münden. Eine solche Verschaltung bringt vergleichbare Druckverhältnisse, d. h. Transmembrandrücke mit sich, da der Unfiltratstrom von der gleichen Pumpe 15 erzeugt wird.

Die einzelnen Filtratablaufleitungen 12ₙ können in eine gemeinsame Leitung 14 münden, wie aus Fig. 1 hervorgeht. Gemäß der vorliegenden Erfindung weist die Filtervorrichtung 1 eine Ventilanordnung mit mehreren Ventileinrichtungen 11, d. h. Ventilen oder Klappen auf, wobei die Ventilanordnung derart ausgebildet ist, dass die einzelnen Module 2 jeweils wahlweise entweder von dem ersten oder dem zweiten Unfiltratanschluss 6, 7 mit Unfiltrat durchströmbar sind.

Es wäre auch möglich, für jedes Modul zwei entsprechende Dreiwegeventile einzusetzen, wobei ein entsprechendes Dreiwegeventil auf jeder Seite des Moduls mit einer Unfiltratleitung vor und hinter dem Modul sowie dem ersten oder zweiten Unfiltratanschluss verbunden ist.

Wie aus Fig. 1 hervorgeht, sind in diesem Ausführungsbeispiel die Modulepakete 3 parallel zueinander angeordnet und ihr jeweils erster Unfiltratanschluss 6 mit einem ersten gemeinsamen Leitungsabschnitt 10a der Unfiltratleitung 10 verbunden. Die jeweils zweite Unfiltratanschluss 7 ist mit einem zweiten gemeinsamen Leitungsabschnitt 10b der Unfiltratleitung 10 verbunden. Die erste und zweite Unfiltratleitung 10a, 10b sind miteinander derart verbunden, dass Unfiltrat durch die Module 2 im Kreislauf geführt werden kann. Jeweils vor und nach den jeweiligen ersten und zweiten Unfiltratanschlüssen dann die Ventile 11 angeordnet, die derart schaltbar sind, dass das jeweilige Modul entweder von dem ersten oder dem zweiten Unfiltratanschluss mit Unfiltrat durchströmbar ist. Die jeweiligen Module 2 weisen hier auch im jeweiligen oberen und unteren Kopfraum Reinigungsanschlüsse 13 auf, über die zum Beispiel Reinigungsmittel anstatt des Unfiltrats über den Unfiltratanschluss 6 durch das Modul geleitet werden kann. Am unteren Ende ist ebenfalls ein Reinigungsanschluss 13 vorgesehen, über den z.B. über den zweiten Unfiltratanschluss 7 das CIP-Medium abgeleitet, beispielsweise in den Gully verworfen werden kann.

Die Reinigungsanschlüsse 13 können jedoch auch zu einem anderen Zweck vorgesehen sein. Der obere Anschluss 13 kann beispielsweise zur Entlüftung verwendet werden, und der untere Anschluss 13 kann beispielsweise für den Ausschub von Unfiltrat oder Reinigungsmedium in einen Gully oder Tank vorgesehen sein. Der bzw. die Anschlüsse 13 können bei jedem Modul 2 vorhanden sein oder auch pro Modulpaket 3 zusammengefasst werden.

Die Ventileinrichtungen 11 sind derart schaltbar, dass die Module 2₁, 2₂, 2₃ in Reihe betrieben werden können und insbesondere die Richtung, in der das Unfiltrat des jeweiligen Moduls durchströmen kann, für jedes Modul einzeln einstellbar ist.

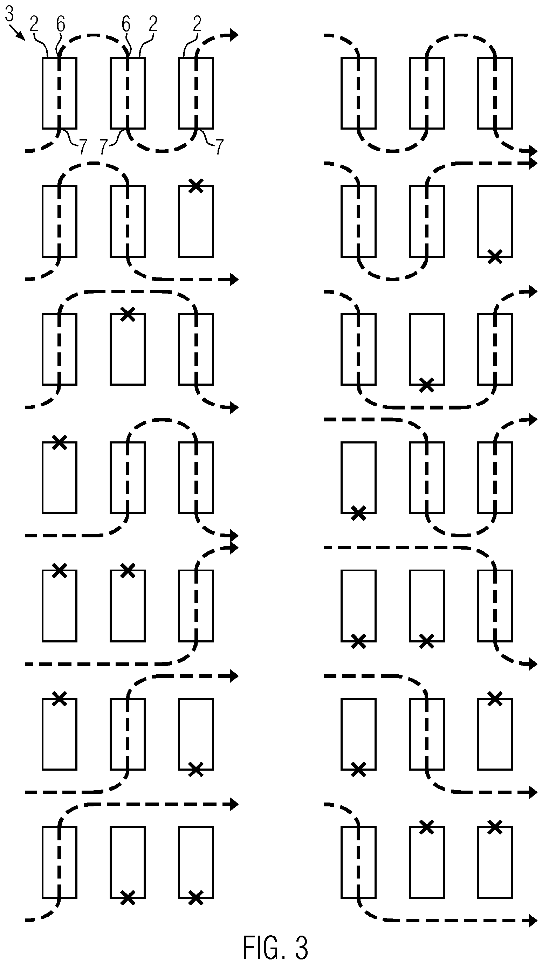

Fig. 3 zeigt die mögliche Verschaltung von beispielsweise einem Modulpaket 3 mit drei Modulen 2. Durch Schalten der Ventile 11 kann beispielsweise, wie aus der ersten Spalte der ersten Zeile der Beispiele hervorgeht, das Unfiltrat durch den zweiten Unfiltratanschluss 7 in das erste Modul eintreten und das Modul am ersten Unfiltratanschluss 6, d. h. hier oben, verlassen. Das zweite Modul wird dann von oben nach unten durchströmt und das dritte wiederum von unten nach oben. Durch Schalten der Ventile 11, wie aus Spalte 2, Zeile 1 hervorgeht, kann der Unfiltratfluss hier auf einfache Art und Weise umgekehrt werden.

Durch die Umkehr der Flussrichtung in den einzelnen Modulen wird der Druckverlustgradient beim Durchströmen mit Unfiltrat über die Länge des Moduls umgekehrt. Dadurch kehrt sich auch der lokale Transmembrandruck über die Länge der Membran um. Das bewirkt, dass die Membran lokal unterschiedlich stark mit Schmutzfracht belastet wird. Eine große transmembrane Druckdifferenz am Einlauf bewirkt einen starken Flux durch die Membrane, was Schmutz stärker in die Poren der Membran presst, was wiederum das Reinigen der Membran erschwert. Eine kleine transmembrane Druckdifferenz am Auslauf der Membran, insbesondere Membranhohlfaser, bewirkt wiederum einen geringen Antransport von Schmutz an die Membran und eine geringere Verschmutzung. Dies bedeutet jedoch auch, einen geringeren lokalen Fluss durch die Membran.

Wird nun der Fluss beizeiten umgekehrt kann die Beladung der Membran mit Schmutz gleichmäßig erfolgen. Außerdem können die Stellen der Membran, die noch sauber sind, vollständig zur Filtration ausgenutzt werden. Wie beispielsweise aus Spalte 1, Zeile 2 der Figur 3 hervorgeht, ist es auch möglich, durch Schalten der Ventile 11 zumindest eines der Module vom Filtratstrom abzukoppeln, d.h. zum Beispiel einem Bypass zu setzen, bzw. zumindest die Ventile in der Filtratableitung des jeweiligen Moduls zu schließen. Somit wird das entsprechende Modul nicht mehr vom Filtrat durchströmt. Hier wird das letzte Modul vom Filtratstrom abgekoppelt. Ein solches abgekoppeltes Modul kann beispielsweise gezielt einer Rückspülung, unterzogen werden oder die Module können auch getaktet betrieben werden, d. h., dass sie kurzzeitig vom Filtratstrom abgekoppelt werden und dann wie in Spalte 1, Zeile 3 der Figur 3 gezeigt ist, wieder mit Unfiltrat beaufschlagt und durchströmt werden. Die Fig. 3 zeigt die Vielzahl an Möglichkeiten, wie die einzelnen Module miteinander verschaltet werden können.

Das Umschalten der Strömungsrichtung, bzw. Abkoppeln vom Filtratstrom während der Produktion, d. h. während der Filtration, wie zuvor beschrieben, bringt den Vorteil mit sich, dass es zu einer gleichmäßigen Beladung der Membranoberfläche mit Schmutz kommt, wobei durch den getaktete Betrieb bzw. die Strömungsumkehr auch ein Reinigungseffekt, d.h. eine Abreinigung der Membran erfolgen kann, was insgesamt zu einer Verlängerung der Standzeit der Filter führt.

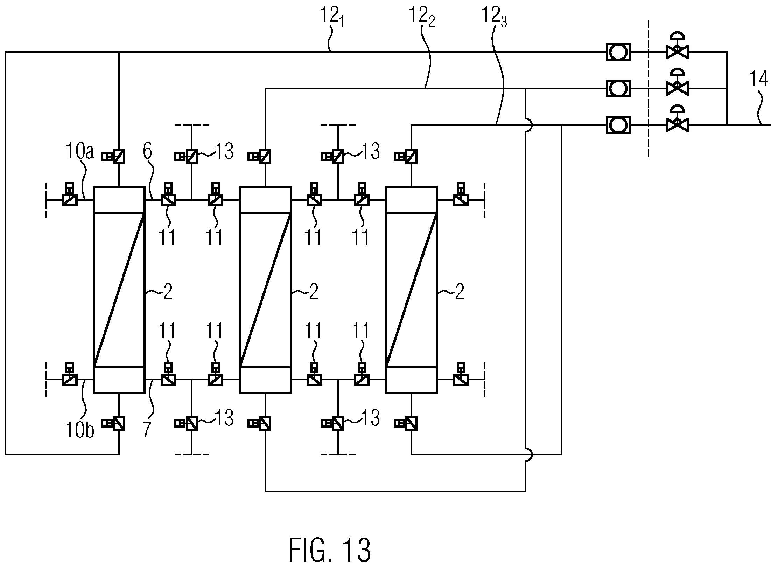

Aber nicht nur für den aktuellen Filtrationsbetrieb ist die erfindungsgemäße Vorrichtung vorteilhaft; auch für die Reinigung und das Rückspülen der Module ist die Ventileinrichtung außerordentlich wichtig. Dazu gibt es grundsätzlich zwei Möglichkeiten und zwar Rückspülen und Reinigen:
- Beim Reinigen wird Reinigungsmedium in Filtrationsrichtung der Unfiltratleitung 10 über einen oder mehrere entsprechende Anschlüsse zugeführt und dann auch filtriert. Es ist grundsätzlich auch möglich, dass das Reinigungsmedium über die Anschlüsse 13 am Modul zur CIP-Reinigung zugeführt wird. Mit diesem Verfahren können insbesondere einzelne Module zwischengereinigt werden und dazu abgekoppelt werden, wie aus Fig. 3 hervorgeht. Es ist aber auch möglich, dass über nur einen CIP-Anschluss statt des Unfiltrats Reinigungsmedium durch die in Reihe geschalteten Module 2 geleitet werden kann, wobei auch hier die Richtung veränderbar ist oder einzelne Module getaktet betrieben werden können. Fig. 13 zeigt eine andere Anordnung eines Reinigungsanschlusses hier CIP Anschlusses. Hier ist der CIP-Anschluss jeweils zwischen zwei Ventilen 11 zwischen zwei Modulen 2 jeweils im oberen und unteren Leitungsabschnitt 10a, 10b vorgesehen. Somit kann jeweils ein CIP-Anschluss 13 für das linke und rechte benachbarte Modul 2 verwendet werden. Nach dem Reinigen kann dann das Medium entweder wieder dem Unfiltratkreislauf zugeführt werden, d. h. in eine Unfiltratleitung oder in ein Unfiltratpuffertank geleitet werden, oder aber verworfen werden. Beim Rückspülen können die Anschlüsse 13 zum Ableiten des Rückspülfiltrats der filtrierenden Module dienen und/oder es können dazu gesonderte Anschlüsse vorgesehen sein.

Die Reinigung in Filtrationsrichtung kann mit folgenden Reinigungsmedien (zum Beispiel CIP Medien) erfolgen: Säure (eventuell mit Additiven), Lauge (eventuell mit Additiven), sonstige Zusätze, zum Beispiel Enzyme, Wasser.

Weiter gibt es noch die Reinigung gegen Filtrationsrichtung (also auch ein Rückspülen), wobei Reinigungsmedien rückwärts über die Anschlüsse 8 durch die Membran gefahren werden und über mindestens einen Unfiltratanschluss das Modul 2 verlassen kann. Dazu können die gleichen oben genannten Reinigungsmedien verwendet werden.

Die Reinigung findet nach dem eigentlichen Filtrationsbetrieb statt, das heißt nachdem das letzte Produkt zum Beispiel Bier gefiltert und aus dem Filter ausgeschoben wurde.
- Das Rückspülen erfolgt z.B. auch während des eigentlichen Filtrationsbetriebs für einzelne Module bzw. Modulpakete. Das bedingt, dass man sehr sauberes Reinigungsmedium benötigt, da man sonst rückwärtig Verschmutzungen einträgt. Auch beim Rückspülen der einzelnen Module können diese durch die Ventileinrichtungen 11 einzeln und gezielt angesteuert werden.

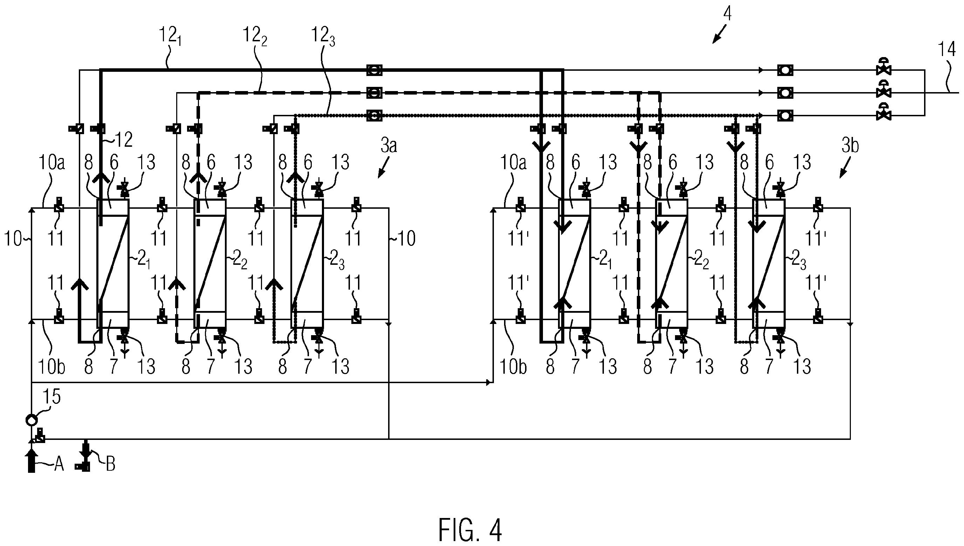

Zum Rückspülen ist ein sehr sauberes Medium notwendig. Das Rückspülen kann mit dem Produkt, hier Bier oder Wasser oder Bier und Wasser erfolgen. Grundsätzlich ist es vorteilhaft, während der Produktion das Produkt, hier das Bier, zum Rückspülen zu verwenden, wobei z. B. vorteilhafterweise das in einem Modul 2 erzeugte Filtrat zum Rückspülen eines anderen Moduls verwendet werden kann, was Zeit spart, (wie beispielsweise in Fig. 4 gezeigt ist). Hier wird beispielsweise Filtrat eines ersten Moduls 2 über die Filtratablaufleitung 12 dem Filtratablauf 8 eines weiteren Moduls 2 zugeleitet. Wenn mehrere n Modulpakete vorgesehen sind, hier Modulpaket 3a und 3b, kann das Unfiltrat beispielsweise des ersten Moduls 2₁ über eine gemeinsame Filtratableitung 12₁ dem Filtratablauf 8 des ersten Moduls 2₁ des zweiten Modulpakets 3b zum Rückspülen zugeführt werden. Wie aus Fig. 4 hervorgeht, kann das Filtrat des zweiten Moduls des Pakets 3a dem zweiten Modul des Pakets 3b zugeführt werden und das Filtrat des dritten Moduls des Pakets 3a dem dritten Modul des Pakets 3b über die jeweiligen gemeinsamen Filtratleitungen zugeleitet werden. Wie aus Fig. 4 hervorgeht, kann das Rückspülmedium dann über die einzelnen Reinigungsanschlüsse bzw. CIP-Anschlüsse 13 (vorteilhafterweise unterer Anschluss 13/ oberer Anschluss 13 kann zur Entlüftung dienen) abgeführt werden und muss nicht in den Unfiltratkreislauf zurückströmen. Die Ventile 11', die in der oberen und unteren Unfiltrat Leitung 10a, 10b jeweils vor und hinter dem ersten und letzten Modul angeordnet sind, sollten dann beim Rückspülen geschlossen sein, da das Modulpaket 3b gespült wird und von dem Modulpaket 3a, das produziert abgetrennt werden muss.

Dies ist nur ein Beispiel für eine mögliche Rückspülart. Um die Rückspülmenge zu erhöhen, ist gemäß der vorliegenden Erfindung die Anzahl der rückgespülten Module kleiner als die Anzahl der filtrierenden Module. Gemäß der vorliegenden Erfindung kann nun der Fluss durch das rückzuspülende Modul 2 auf einfache Art und Weise erhöht werden, indem mehr Module filtrieren und somit Rückspülfiltrat erzeugen, als rückgespült werden.

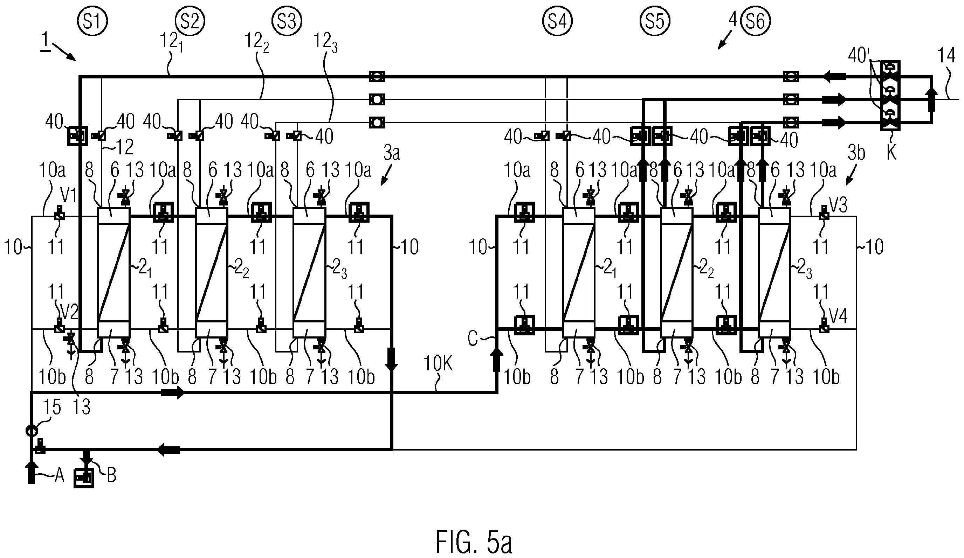

Die Figuren 5a bis 10b zeigen den Ablauf eines Rückspülprozesses.

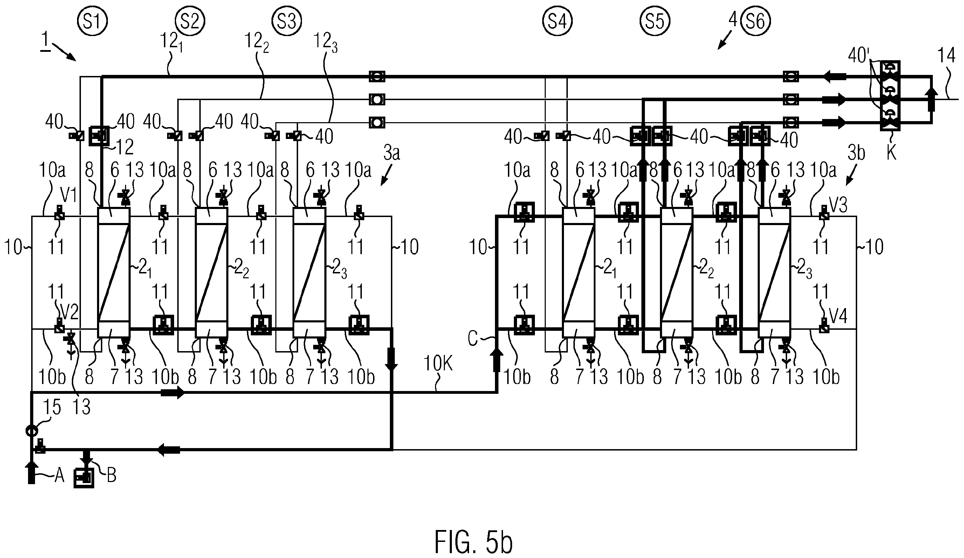

Figur 5a zeigt ein Ausführungsbeispiel mit zwei Modulpaketen 3a, 3b gemäß der vorliegenden Erfindung, bei der zwei Module an der Stelle S5 S6 im rechten Modulpaket 3b ein Modul an Stelle S1 des ersten Modulpakets 3a rückspülen. Somit ist der Volumenstrom, der zum Rückspülen dient, etwa doppelt so groß wie der Volumenstrom des Filtrats in einem Modul. Wie durch die Pfeile dargestellt, wird Unfiltrat über die Unfiltratpumpe 15 und Leitungsabschnitt 10k der Unfiltratleitung 10 zum rechten Modulpaket 3b geleitet. In den Figuren 5 bis 11 sind geöffnete Ventile im Kästchen dargestellt, die nicht gekennzeichneten Ventile sind geschlossen. Das Unfiltrat kann dann über die Leitungsabschnitte 10a und 10b den oberen und unteren Kopfraum des Moduls an Stelle S4 durchströmen und gelangt durch Schalten der Ventile 11 vor dem filtrierenden Modul an Stelle S5 zum oberen oder unteren Unfiltratanschluss 6 und 7 (in den Figuren sind einfachheitshalber beide Ventile geöffnet, wobei jeweils eines der Ventile geschlossen sein kann um für den Crossflow Betrieb den Fluss in einer Richtung zu realisieren- bei einem Dead End Modus können auch beide Ventile offen sein und über beide Filtratabläufe 8 abgeleitet werden) und weiter über ein geöffnetes Ventil 11 zu den Unfiltratanschlüssen 6 oder 7 des Moduls 2 an Stelle S6. Das bedeutet, dass das Modul 2 an Stelle S4 von der Filtration abgekoppelt ist, wobei Unfiltrat nur durch den Kopfraum hindurchströmt, jedoch die Filtratabteilung beispielsweise durch die Ventile 40 abgesperrt sind. Die Ventile 40 liegen zwischen den beiden Filtratabläufen 8 und der entsprechenden Filtratablaufleitung 12₁. Die Module 2 an Stelle S5 und S6 filtrieren also das Filtrat, das das Modul an einem oder beiden Filtratanschlüssen 8 verlässt. Das Unfiltrat kann über einen jeweiligen CIP Anschluss 13 oder gesonderten nicht dargestellten Anschluss abgeführt und in einem Unfiltrattank geleitet werden oder dem Unfiltratkreislauf zur Pumpe 15 rückgeleitet werden.

Es wäre auch grundsätzlich möglich die Module so zu verschalten, dass das Unfiltrat die zu filtrierenden Module in Reihe durchströmt und das Unfiltrat dann das Modul wieder über einen Unfiltratanschluss 6, 7 bei einem entsprechend geöffneten Ventil an Stelle V3 oder V4 verlässt und so zur Pumpe 15 rückgeführt wird- es ist aber im Hinblick auf die Druckverhältnisse besser wenn die Ventile an Stelle V3 und/oder V4 geschlossen sind, derart, dass hier kein Unfiltrat zur Pumpe geleitet wird.

Wie bereits erläutert kann das filtrierende Modul auch im Dead End Modus betrieben werden. Dann sind die Ventile, die das Modul mit der Unfiltratleitung zur Pumpe verbinden geschlossen (hier beide Ventile an Stelle V3 und V4).

Bei den gezeigten Ausführungsbeispielen wird das erzeugte Rückspülfiltrat dann in die entsprechenden Filtratableitungen 12₂, 12₃ geleitet und über den Knotenpunkt K, wo alle Filtratleitungen 12₁, 12₂, 12₃ zusammenlaufen auf die Leitung 12₁ geführt und fließt dort über das geöffnete Ventil 40 von unten in das Modul durch den Filtratablauf 8, spült das Modul 2 an Stelle S1 zurück, wobei das Rückspülfiltrat das Modul am Unfiltratanschluss 6 auf der Seite verlässt, wo das nachfolgende Ventil 11 geöffnet ist, hier also auf der rechten Seite. Es fließt z.B. über die Kopfräume der Module an den Stellen S2 und S3 über die Unfiltratleitung 10 zurück in Richtung Unfiltratpumpe 15, wobei in der Unfiltratleitung zwischen den Punkten B und A, das heißt also vor der Unfiltratpumpe 15 noch ein nicht dargestellter Puffertank zum Puffern des Unfiltrats vorgesehen sein kann. In diesen Tank kann auch Unfiltat von den CIP Anschlüssen geleitet werden.

Bei dieser Ausführungsform ist wichtig, dass während des Rückspülvorgangs jeweils ein Ventil vor dem Unfiltratanschlüssen 8, 7 des rückzuspülenden Moduls, hier an Stelle S1 geschlossen wird, so dass kein Unfiltrat von der Unfiltratpumpe 15 zu den Unfiltratanschlüssen 6, 7 gepumpt werden kann. Das heißt, dass die mit V1 und V2 gekennzeichneten Ventile 11 hier geschlossen sein müssen.

Weiter ist wichtig, dass jeweils ein Ventil nach den Unfiltratanschlüssen 6, 7 der Module 2, die das Rückspülfiltrat filtrieren, hier die Module an Stelle S5 und S6 geschlossen sind, so dass kein Unfiltrat von den filtrierenden Modulen in Richtung Unfiltratpumpe 15 fließen kann. Das heißt, dass die Ventile 11, die mit V3 und V4 gekennzeichnet sind, geschlossen sein müssen.

Dadurch, dass V3 und V4 geschlossen sind, das heißt, dass in anderen Worten kein Unfiltrat außer das aus den rückgespülten Modul oder Modulen zur Pumpe 15 rücklaufen kann, ergibt sich, dass der Druck am Einlauf des rückzuspülenden Moduls größer ist als an dessen Ablauf, so dass das Rückspülfiltrat ablaufen kann. Das Druckniveau hinter der Pumpe 15 (in Flussrichtung betrachtet) ist höher als auf der Filtratseite. Bei diesem Ausführungsbeispiel sind beispielsweise zwei Modulpakete vorgesehen mit sechs Modulen, das heißt x=6. Es werden zum Filtrieren des Rückspülfiltrats zwei Module verwendet, d.h. nₐ=2 und es wird ein Modul rückgespült, d.h. n_{b}=1, und es sind drei Module abgekoppelt, das heißt, dass die Ventile derart geschaltet sind, dass diese Modul weder filtrieren noch rückgespült werden, wobei hier nₖ = 3. Allgemein gilt:
n_{b}=x-nₐ-nₖ, wobei nₐ ,n_{b} einer ganzen Modulanzahl entspricht, x die Gesamtanzahl der Module der Moduleinheit ist und nₖ die Anzahl der Module, die abgekoppelt sind.

Figur 5b zeigt das in Figur 5a gezeigte Ausführungsbeispiel, wobei jedoch hier das Rückspülfiltrat von oben eingeleitet wird.

In Figuren 5a und 5b wurde das Modul an Stelle S1 einmal von oben und einmal von unten eingeleitet. Diese Prozesse können alternativ oder nacheinander durchgeführt werden.

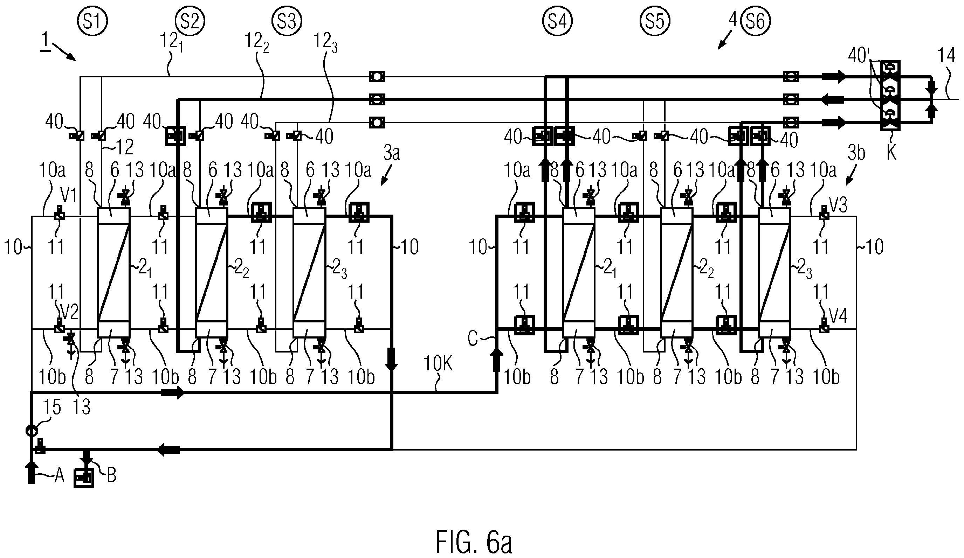

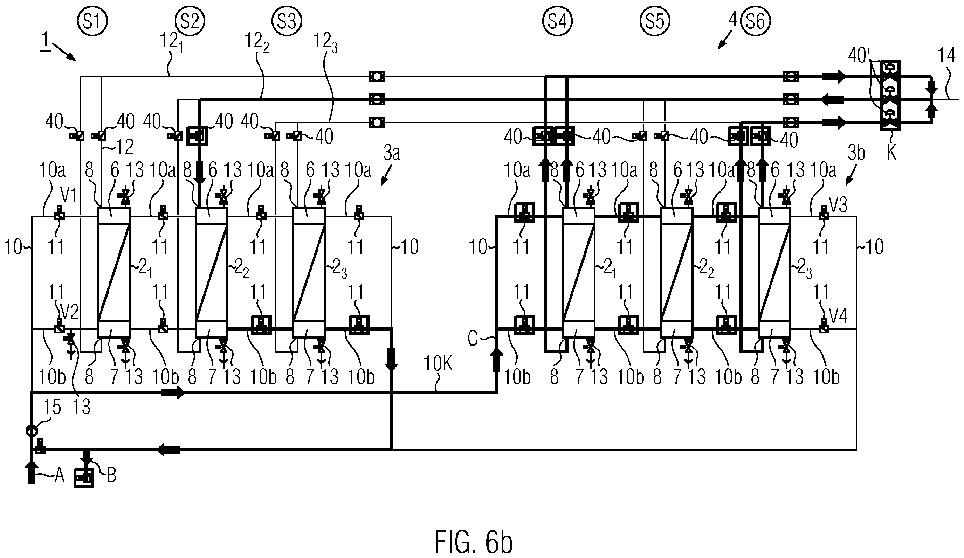

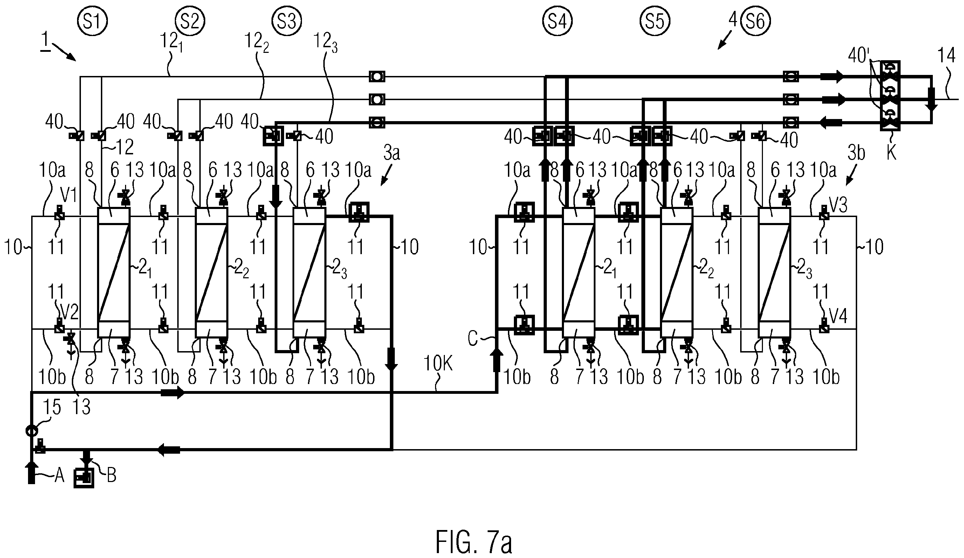

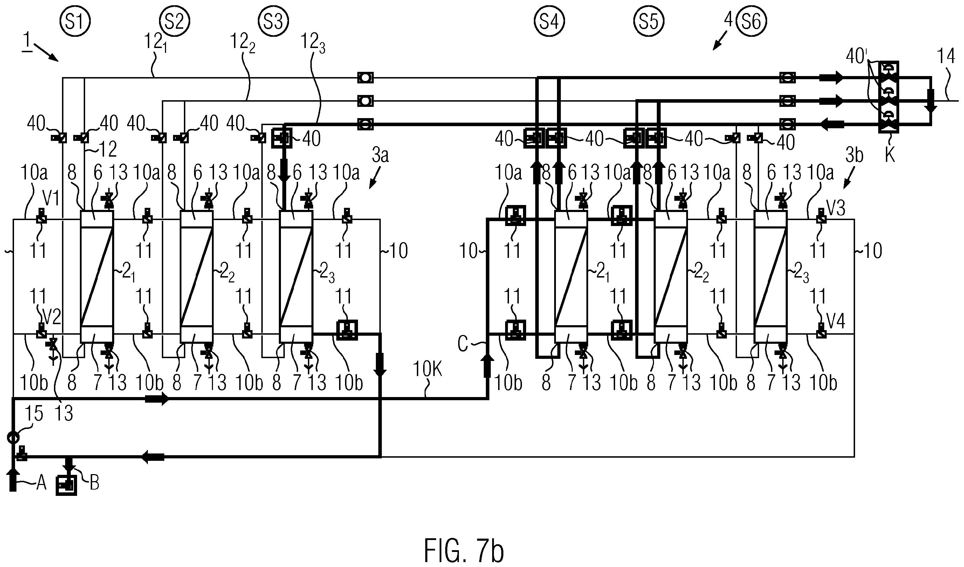

Gemäß einer Ausführungsform können dann auch noch nacheinander die Module 2 an der Stelle S2 und S3 rückgespült werden. Figur 6a zeigt, dass das rückzuspülende Modul 2 sich an der Stelle S2 befindet und die Module 2 an der Stelle S4 und S6 das Rückspülfiltrat filtrieren, da das Modul an der Stelle S2 sich in einer mittleren Position befindet und mit der Filtratablaufleitung 12₂ verbunden ist, ist es vorteilhaft, dass die Module 2 an den Stellen S4 und S6 verwendet werden zum Rückspülen, die mit den anderen Filtratablaufleitungen 12₁ und 12₃ verbunden sind. Das Rückspülfiltrat wird von den beiden Modulen dann wieder zum Knotenpunkt K geführt und über die Filtratablaufleitung 12₂ entweder von unten oder von oben dem Modul 2 an Stelle S2 zum Rückspülen zugeführt (siehe Figur 6a und 6b). Wie auch im Zusammenhang mit Figur 5 beschrieben, kann das Rückspülfiltrat dann über die Unfiltratleitung zurück Richtung Unfiltratpumpe 15 fließen und erneut im Kreislauf zu den filtrierenden Modulen an den Stellen S4 und S6 geleitet werden. Im Anschluss kann dann das nächste Modul an Stelle S3 rückgespült werden, wie in den Figuren 7a und b gezeigt ist, wobei hier vorteilhafterweise als filtrierende Module Module gewählt werden, die mit einer anderen Filtratablaufleitung verbunden sind als das rückzuspülende Modul. Hier befindet sich das rückzuspülende Modul an Stelle S3 und die filtrierenden Module an Stelle S4 und S5.

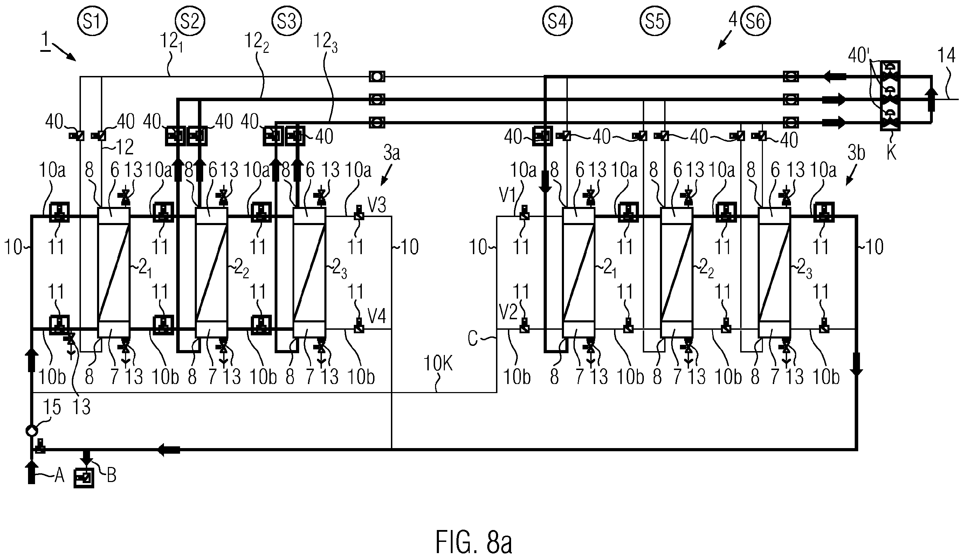

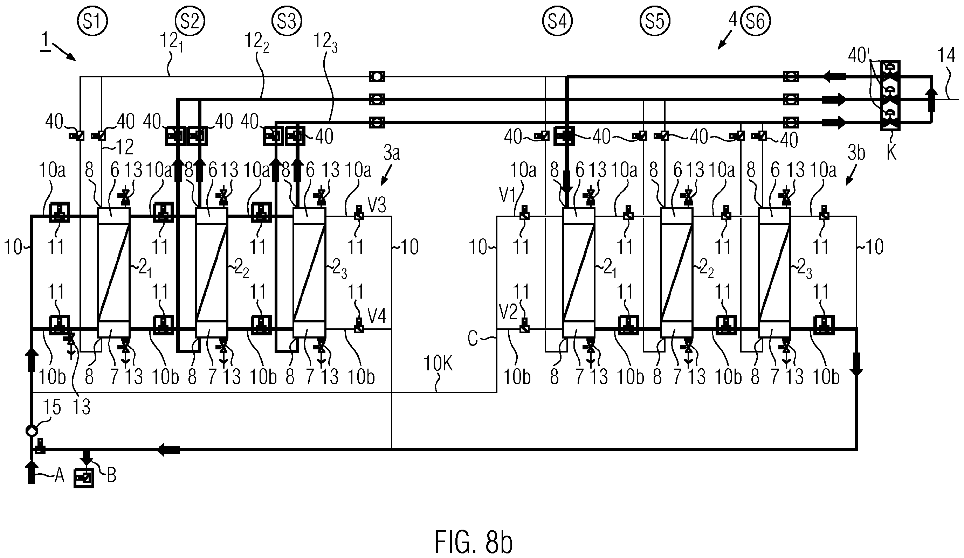

Nachfolgend können auch noch die Module des zweiten Modulpakets 3b rückgespült werden, wie beispielsweise in Figuren 8a und b dargestellt ist. Hier dienen die Module an Stelle S2 und S3 als filtrierende Module und Spülen das Modul an der Stelle S4 zurück. Dabei wird Unfiltrat über die Pumpe 15 und die Unfiltratleitung 10 bei geöffneten Ventilen 11 über den Kopfraum des Moduls an Stelle S1 zu dem nachfolgenden Modul an Stelle S2 geleitet und in den Modulen 2 an der Stelle S2 und S3 filtriert und das Rückspülfiltrat den Leitungen 12₂, 12₃ zugeführt über den Knotenpunkt K geleitet und über die Filtratablaufleitung 12₃ dem Modul 2 an Stelle S4 von unten (Figur 8a) oder von oben (Figur 8b) zugeleitet. Dort tritt das Rückspülfiltrat am Filtratablauf 8 in das Modul 1 und verlässt das Modul auf der anderen Seite am Unfiltratanschluss 6 und wird über die Unfiltratleitungsabschnitte 10a zwischen den nachfolgenden Modulen im Kreislauf zur Unfiltratpumpe 15 rückgeführt. Hier müssen können die Ventile, die mit V3 und V4 gekennzeichnet sind, geschlossen sein, damit nicht Unfiltrat von filtrierenden Modulen in Richtung Pumpe 15 geleitet wird sondern z.B. über die CIP - Anschlüsse 13 abgeleitet werden.

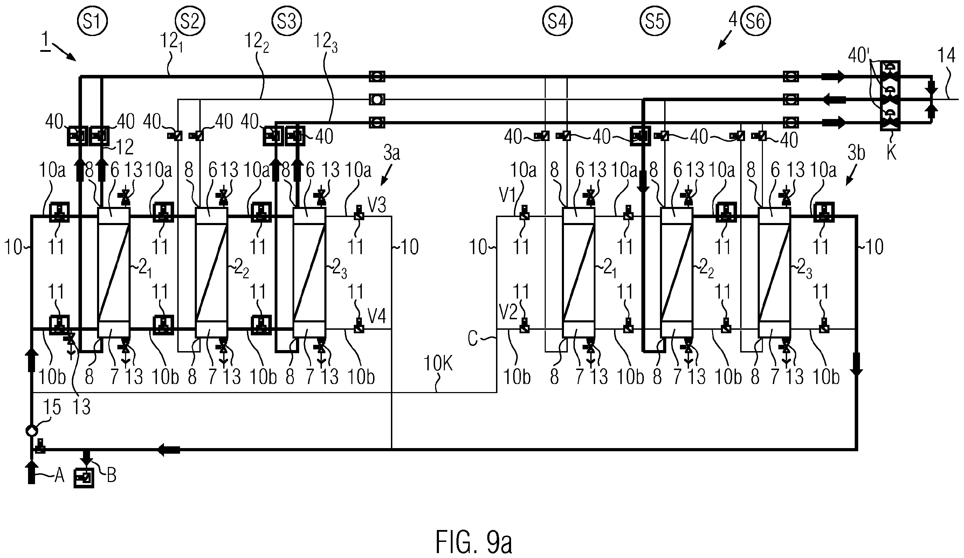

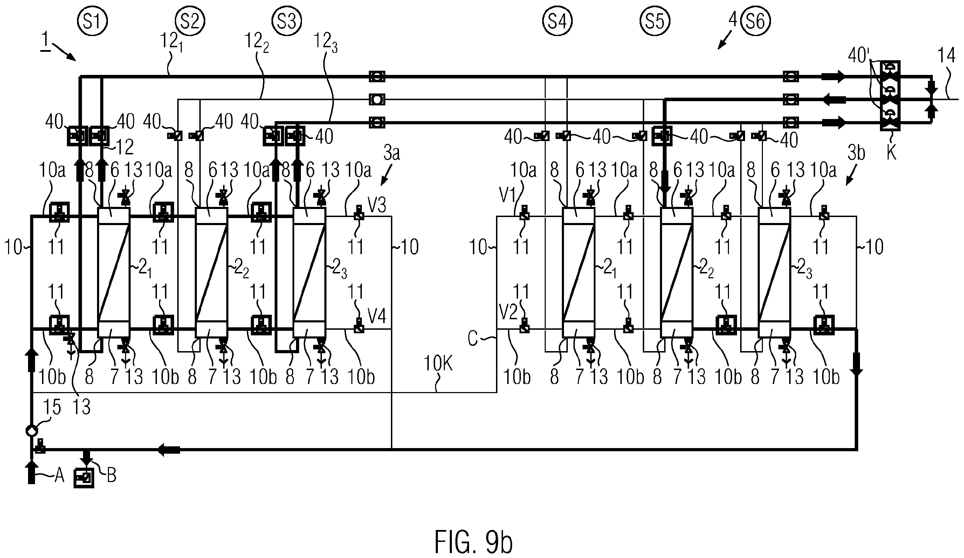

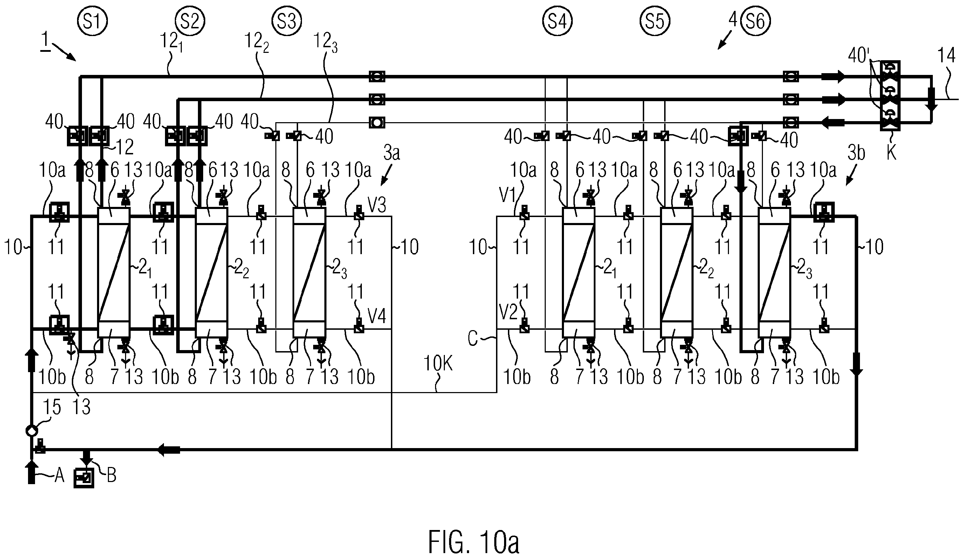

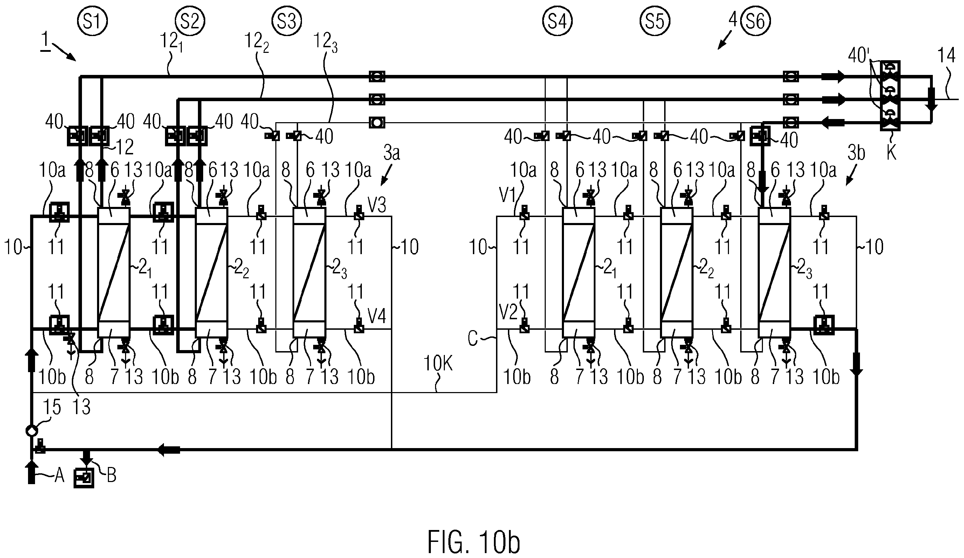

Jetzt kann wie im Zusammenhang mit den Figuren 9a, 9b, 10a, 10b gezeichnet, nacheinander jeweils das Modul an Stelle S4, S5 , S6 rückgespült werden, wobei ein Modul jeweils von zwei filtrierenden Modulen rückgespült wird und zwar von denen, die mit einer anderen Filtratablaufleitung als das rückzuspülende Modul verbunden sind.

Dies war nur ein Beispiel dafür, wie beispielsweise alle Module einer Moduleinheit 4 rückgespült werden können, wenn jeweils zwei filtrierende Module eines rückspülen sollen.

Die mit V₁ und V₂ gekennzeichneten Ventile müssen ebenfalls geschlossen sein, damit kein Unfiltrat zu dem rückzuspülenden Modul fließen kann.

Das in Figuren 5 bis 10 gezeigte Ausführungsbeispiel ist nur ein Beispiel. Es sind beliebige Verschaltungen zwischen rückspülenden Modulen und filtrierenden Modulen möglich wie durch die oben genannte Formel 1 gezeigt ist. Somit kann der Fluss durch ein rückzuspülendes Modul beliebig durch das Verhältnis: filtrierende Module / rückzuspülende Module eingestellt werden.

Gemäß einer bevorzugten Ausführungsform kann bei dem Spülen der Fluss durch das rückzuspülende Modul schrittweise erhöht werden, das heißt hochgerammt werden, indem die Anzahl der filtrierenden Module im Verhältnis zu den rückzuspülenden Modulen erhöht wird. Am Ende des Rückspülprozesses kann dann die Anzahl der filtrierenden Module im Verhältnis zu den rückzuspülenden Modulen wieder reduziert werden, um den Fluss bzw. Volumenstrom zu reduzieren.

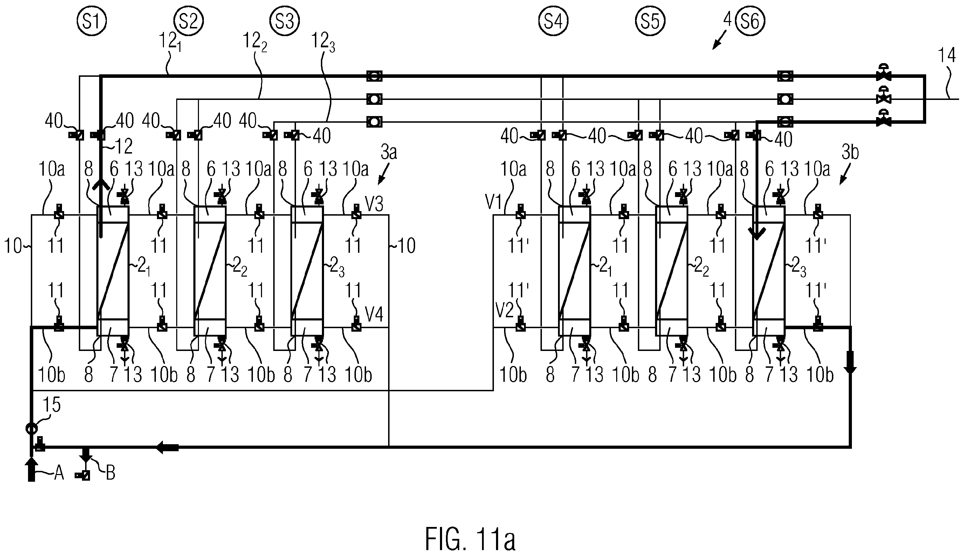

Die Figuren 11a bis 11e zeigen grob schematisch ein solches Ausführungsbeispiel, wobei hier die Ventilstellungen, nicht gezeigt sind. In Figur 11a ist gezeigt, dass beispielsweise am Anfang des Hochrampens ein Modul an Stelle S1 ein Modul an Stelle S6 rückspült. Hier läuft das Rückspülfiltrat ebenfalls wieder über den Knotenpunkt K. Hier sind die Module an den Stellen S2, S3, S4 und S5 abgekoppelt, d.h. werden weder rückgespült noch filtrieren sie. Ventile V1, V2, V3, V4 müssen wieder geschlossen sein.

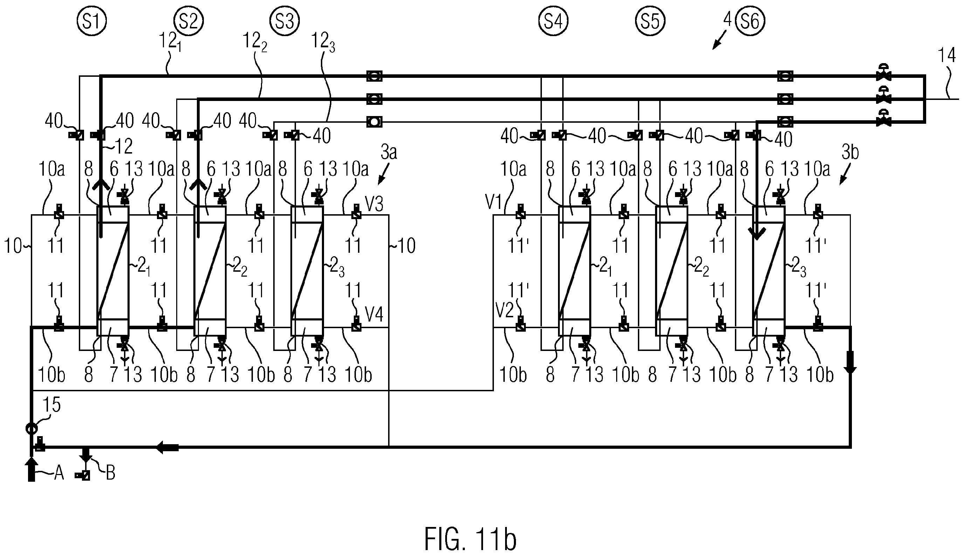

In Figur 11b wird nun das Modul an der Stelle S2 dazu geschaltet, indem beispielsweise eines der Ventile 11 zwischen dem Modul an Stelle S1 und S2 geöffnet wird (hier das untere in Unfiltratleitung 10b) und auch zumindest eines der zu diesem Modul gehörigen Ventile 40. Hier wird über einen Filtratanschluss 8 abgeleitet, wobei auch über beide Anschlüsse abgeleitet werden kann Das Rückspülfiltrat von zwei Modulen wird dann über den Punkt K in das Modul an Stelle S6 geleitet, wodurch sich der Volumenstrom erhöht.

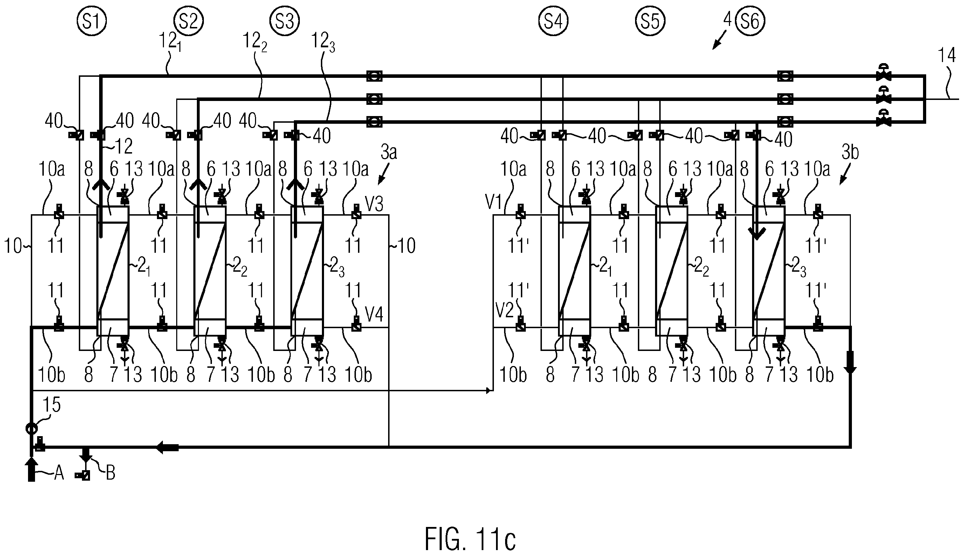

In Figur 11c wird nun das Modul an Stelle S3 zugeschaltet, so dass nun drei filtrierende Module das eine Modul an Stelle S6 rückspülen. Dabei wird das Rückspülfiltrat der Module an der Stelle S1, S2 über die entsprechenden Filtratableitungen 12₁, 12₂ über den Knotenpunkt K zu dem Filtratanschluss 8 geleitet, während das Modul, das mit der gleichen Filtratableitung 12₃, wie das rückzuspülende Modul verbunden ist, das Rückspülfiltrat direkt über die Leitung 12₃ dem rückzuspülenden Modul zuleitet.

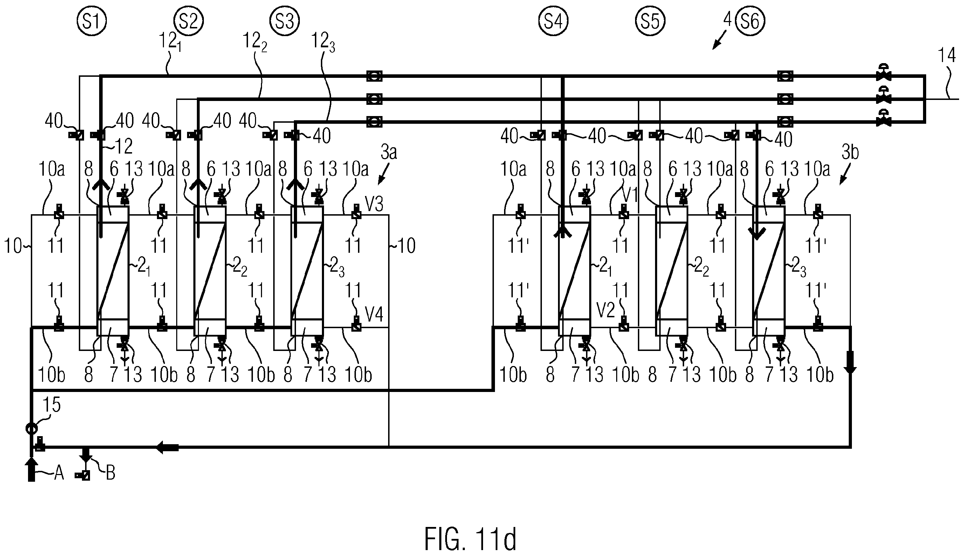

Figur 11d zeigt, dass die Anzahl der filtrierenden Module auf 4 erhöht ist, wobei nun auch das Modul in dem zweiten Modulpaket 3b an der Stelle S4 zum Filtrieren verwendet wird. Jetzt ist nur noch das Modul an der Stelle S5 abgekoppelt, wobei jetzt das mit V1 und V2 gekennzeichnete Ventil auf jeden Fall geschlossen sein muss, damit kein Unfiltrat in das rückzuspülende Modul an Stelle S6 laufen kann, da dieses nicht filtrieren soll, sondern rückgespült werden soll, jedoch das vorher angeordnete Modul filtrieren soll, so dass hier ein Ventil 11 geöffnet ist, um dem Modul an Stelle S4 Unfiltrat über einen der Unfiltratanschlüsse zuzuführen. Somit lässt sich der Fluss noch weiter erhöhen bzw. hochrampen.

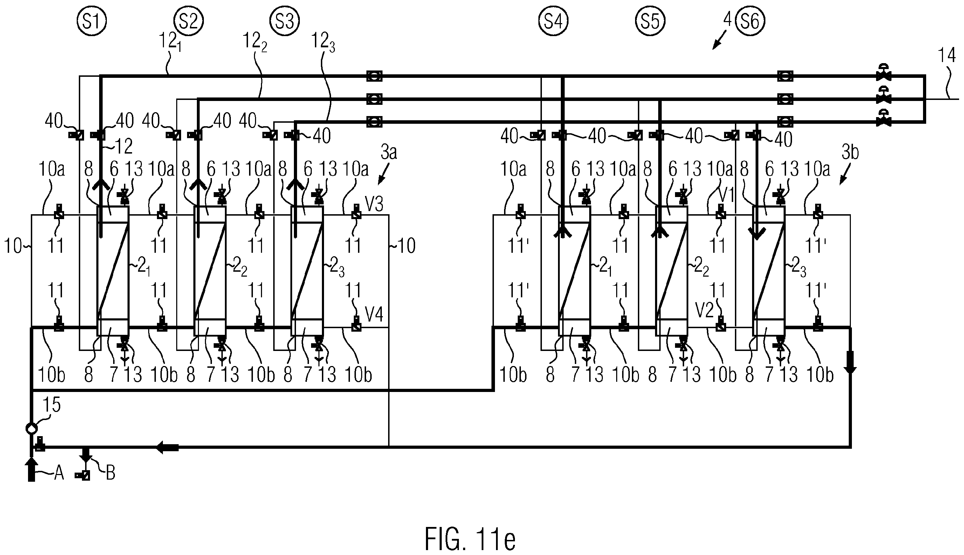

Figur 11e zeigt nun das insgesamt fünf Module filtrieren und zwar an den Stellen S1, S2, S3, S4, S5, um das Modul an Stelle S6 zurückzuspülen. Damit kein Filtrat zum Unfiltratanschluss des Moduls an Stelle S6 läuft, sind die mit V1 und V2 gekennzeichneten Ventile 11 geschlossen, während die Ventile 11 vor den Modulen an Stelle S4 und S5 derart geöffnet sind, dass Unfiltrat von einer Seite in das jeweilige Modul laufen kann. Von der Verschaltung, wie sie in Figur 11e gezeigt ist, kann der Weg wieder rückwärts gegangen werden und die Anzahl der filtrierenden Module schrittweise reduziert werden. Dann kann ein entsprechender Prozess beispielsweise für ein anderes rückzuspülendes Modul gestartet werden, beispielsweise das an Stelle S5 oder S4 oder aber S1, S2, S3.

Gemäß der vorliegenden Erfindung ist es auch möglich, dass beispielsweise mehrere Module gleichzeitig rückgespült werden, wobei dann aber die Anzahl der filtrierenden Module höher sein muss.

Ein weiteres Ausführungsbeispiel sieht beispielsweise vor, dass eine vorbestimmte Anzahl an Modulen eine entsprechende Anzahl an Modulen rückspült und dann ein oder mehrere rückzuspülende Module ausgekoppelt werden, so dass sich der Fluss erhöht. Beispielsweise können zwei filtrierende Module zwei Module rückspülen, dann eines ausgekoppelt werden, so dass dann zwei filtrierende Module eines rückspülen. Möglich ist auch, dass beispielsweise ein filtrierendes Modul ein weiteres rückspült, wobei ein filtrierendes Modul hinzugekoppelt wird, so dass dann zwei filtrierende Module eines rückspülen.

Gemäß einem Ausführungsbeispiel können beispielsweise drei Module filtrieren und drei Module rückgespült werden (Schritt 1).

Dann im anschließenden Schritt wird die Flussgeschwindigkeit in der Membran erhöht, indem ein Membranmodul, dass rückgespült werden soll, ausgekoppelt wird (Schritt 2).

Es spülen nun z.B. drei filtrierende Module zwei Membranmodule zurück (Schritt 3).

Anschließend wird wieder ein rückspülendes Modul ausgekoppelt, so dass zwei Module ein Modul spülen (Schritt 4).

Im nächsten Schritt filtrieren drei Module und es wird nur eines rückgespült (Schritt 5).

Als Beispiel für ein Modul, das 10 hl/h filtriert, bedeutet dass:
- bei Schritt 1 wird mit 10 Hektoliter/Stunde zurückgespült
- bei Schritt 3 mit 15 Hektoliter/Stunde
- bei Schritt 4 mit 20 Hektoliter /Stunde
- bei Schritt 5 mit 30 Hektoliter/Stunde etc.

Somit lässt sich der Volumenstrom durch das rückzuspülende Modul einstellen.

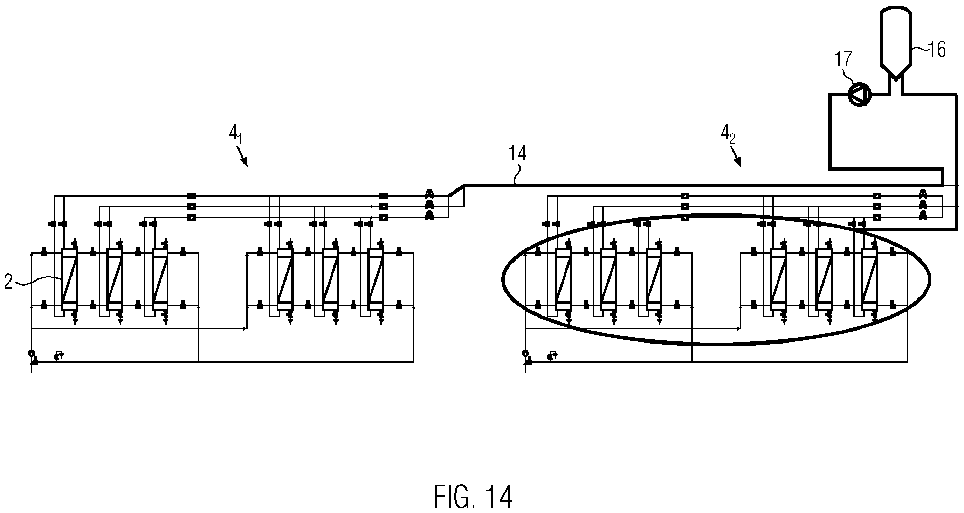

Obwohl gemäß der Erfindung nicht notwendig, kann gemäß der in Fig. 14 gezeigten Ausführungsform es auch vorteilhaft sein, wenn das von den Modulen erzeugte Filtrat in einem Filtratpuffertank 16 gesammelt wird. Dieses Filtrat kann zusätzlich dann zum Rückspülen verwendet werden. Dabei befindet sich am Auslauf des Filtratpuffertanks eine Pumpe 17.

Grundsätzlich kann bei den vorherigen Ausführungsbeispielen das rückgespülte Medium zum Beispiel über mindestens einen Reinigungsanschluss 13 eines entsprechenden Moduls (vorzugsweise über den unteren Anschluss 13) abgeleitet werden, und muss somit nicht erneut dem Unfiltrat Kreislauf zugeführt werden.

Das bedeutet, dass zur Austragung der Beläge abgespülten Rückstände nicht durch ein nachfolgendes Modul gefahren werden müssen. Da es möglich ist die Module einzelnen zu reinigen oder rückzuspülen kann jedes Modul nach seinem individuellen Bedarf gereinigt werden, das heißt in Abhängigkeit der Länge, Intensität und des Verschmutzungsgrades. Es wäre auch möglich Rückstände im Bypass durch die Kopfräume auszutragen, derart, dass Rückstände nicht durch nachfolgende Module gefahren werden müssen. Dazu können die Module beispielsweise wie in Figur 3 Spalte 1 Zeile 7 gezeigt ist verschaltet werden.

Durch die gezielte Umschaltung der Wege des Unfiltrats durch die Module ist es möglich, die Standzeit der Filtervorrichtung zu optimieren, da die Membran in den Modulen lokal gleichmäßig verschmutzt wird. So erhält sie gezielt einen gleichmäßigen Belag in und außerhalb der Hohlfasermembran. Ein gleichmäßiger Belag ist zudem einfach abzureinigen. Auch bei der Reinigung ist die gezielte Taktung einzelner Module von Vorteil, da so auch die Membran gereinigt wird, die verschmutzt ist, und nicht nur die, die den höchsten Fluss zulässt (welche normalerweise die sauberste ist).

Es ist ganz besonders vorteilhaft, wenn die Vorrichtung Regelventile 40, oder 40' bzw. Durchflussregler, insbesondere in der Filtratableitung aufweist, derart, dass der Durchfluss (Volumen pro Zeit) oder ein dazu proportionaler Wert durch ein Modul einstellbar ist, wobei insbesondere der Durchfluss aller Module in einem Modulpaket auf einen gleichen Wert eingestellt werden kann, was eine gleichmäßige Reinigung oder Rückspülung und somit eine gleichzeitige Rückspülung bzw. Reinigung aller Module eines Modulpakets ermöglicht. Die Ventile 40 können auch Absperrventile sein.

Die Umkehr der Strömungsrichtung oder das Einleiten eines Rückspülvorgangs für ein oder für mehrere Module kann in Abhängigkeit eines Filterparameters erfolgen, der für jedes Modul einzeln gemessen werden kann, beispielsweise der Transmembrandruck und/oder der Filtratfluss pro Zeit pro Modul (das heißt Volumenstrom pro Zeit pro Modul). Es ist auch möglich, eine Strömungsumkehr oder Taktung bzw. Rückspülung einzuleiten, nachdem eine vorbestimmte Zeit abgelaufen ist und/oder eine bestimmte Menge filtriert wurde.

## Patentansprüche

1. Rückspülverfahren für eine Filtervorrichtung (1), insbesondere zur Bierfiltration, mit einer oder mehreren Moduleinheiten (4), wobei eine Moduleinheit (4) mindestens ein Modulpaket mit mehreren Modulen (3), insbesondere mindestens drei Modulen zur Crossflow- Filtration umfasst,
**dadurch gekennzeichnet, dass**
innerhalb einer Moduleinheit (4) mindestens ein Modul (2) mit in dieser Moduleinheit (4) erzeugtem Filtrat rückgespült wird, und während des Rückspülens zumindest zeitweise die Anzahl der rückgespülten Module (2) kleiner ist als die Anzahl der Module (2), die das Filtrat produziert haben.

2. Rückspülverfahren nach Anspruch 1, **dadurch gekennzeichnet, dass**
die Moduleinheit (4) mindestens zwei Modulpakete (3a, 3b) aufweist, wobei vorzugsweise entweder
- die Module (2) eines Modulpakets (3a, 3b) mit Filtrat zurückgespült werden, das in einem anderen Modulpaket (3a, 3b) der Moduleinheit (4) erzeugt wurde oder
- die Module (2) eines Modulpakets (3a, 3b) mit Filtrat zurückgespült werden, das in einem anderen und dem gleichen Modulpaket der Moduleinheit (4) erzeugt wurde oder
- die Module (2) eines Modulpakets (3a, 3b) mit Filtrat zurückgespült werden, das im gleichen Modulpaket erzeugt wurde.

3. Rückspülverfahren nach Anspruch 1 oder 2, **dadurch gekennzeichnet, dass** das in den filtrierenden Modulen (2) erzeugte Rückspülfiltrat dem mindestens einem rückzuspülenden Modul (2) über einen Filtratanschluss (8) zugeführt wird und über einen Unfiltratanschluss (6, 7) abgeleitet wird, und im Kreislauf wieder den filtrierenden Modulen (2) rückgeführt wird.

4. Rückspülverfahren nach Anspruch 3, **dadurch gekennzeichnet, dass** das Rückspülfiltrat mehrerer Module in jeweiligen Filtratleitungen (12) geleitet wird und in einer Leitung zusammengeführt und dem rückzuspülenden Modul (2) zugeführt wird.

5. Rückspülverfahren nach mindestens Anspruch 3 oder 4, **dadurch gekennzeichnet, dass**
die Modulpakete (3a, 3b) einer Moduleinheit (4) eine gemeinsame Unfiltratpumpe (15) aufweisen, über die bei der Filtration Unfiltrat zu den Unfiltratanschlüssen (6, 7) der Module (2) gepumpt wird, und die auch die Rückspülflüssigkeit im Kreislauf von dem mindestens einem rückzuspülenden Modul (2) zu den filtrierenden Modulen (2) pumpt, wobei insbesondere keine weitere Pumpe vorgesehen ist um einen Kreislauf zur Rückspülung am Laufen zu halten.

6. Rückspülverfahren nach mindestens einem der Ansprüche 1-5, **dadurch gekennzeichnet, dass** zwischen den rückzuspülenden Modulen (2) und der Unfiltratpumpe (15) in der Unfiltratleitung ein Puffertank vorgesehen ist, in welchem beim Rückspülen erzeugtes Unfiltrat gepufften wird.

7. Rückspülverfahren nach mindestens einem der Ansprüche 1-5, **dadurch gekennzeichnet, dass** beim Rückspülen der Druck am Ausgang des rückzuspülenden Moduls (2) kleiner ist als auf dessen Eingangsseite am Filtratanschluss.

8. Rückspülverfahren nach mindestens Anspruch 5 und 7, **dadurch gekennzeichnet, dass**
in einem Modulpaket (3a, 3b) mehrere Module (2) parallel zueinander angeordnet sind und die Module (2) einen ersten Unfiltratanschluss (6) an einem ersten Ende des Moduls (2) aufweisen und einen zweiten Unfiltratanschluss (7) an der gegenüberliegenden Seite des Moduls (2), sowie mindestens einen Filtratablauf (8), wobei
während eines Rückspülvorgangs mindestens ein Ventil (11) vor den Unfiltratanschlüssen (6, 7) des rückzuspülenden Moduls (2) geschlossen wird, so dass kein Unfiltrat von der Unfiltratpumpe (15) zu den Unfiltratanschlüssen (6, 7) gepumpt werden kann,
und vorzugsweise mindestens ein Ventil (11) nach den Unfiltratanschlüssen (6, 7) der Module, die das Rückspülfiltrat filtrieren, geschlossen ist, so dass kein Unfiltrat von den filtrierenden Modulen (2) Richtung Unfiltratpumpe (15) fließen kann.

9. Rückspülverfahren nach mindestens einem der Ansprüche 1-8, **dadurch gekennzeichnet, dass** die Module (2) einen ersten und zweiten Unfiltratanschluss (6, 7) aufweisen und die Unfiltratanschlüsse (6, 7), insbesondere über einen Kopfraum der Module (2) über gemeisame Leitungsabschnitte der Unfiltratleitung (10a, 10b) miteinander verbunden sind, wobei
der jeweils erste Unfiltratanschluss (6) eines Moduls (2) mit einem ersten gemeinsamen Leitungsabschnitt (10a) einer Unfiltratleitung (10) in Verbindung steht und der jeweils zweite gegenüberliegender Unfiltratanschluss (7) mit einem zweite gemeinsamen Leitungsabschnitt (10b) einer Unfiltratleitung (10) in Verbindung steht, wobei jeweils vor und nach den jeweiligen ersten und zweiten Unfiltratanschluss (6, 7) Ventile (11) angeordnet sind, die derart schaltbar sind, dass das jeweilige Modul (2) entweder von dem ersten oder dem zweiten Unfiltratanschluss (6, 7) mit Unfiltrat durchströmt wird, wobei die Leitungsabschnitte (10a, 10b) als Ringleitung ausgebildet sind.

10. Rückspülverfahren nach mindestens einem der Ansprüche 1-9, **dadurch gekennzeichnet, dass** während des Rückspülen der Durchfluss durch das mindestens eine rückzuspülende Modul (2) erhöht wird, indem die Anzahl der Module (2) die Rückspülfiltrat erzeugen, das dem mindestens einem rückzuspülenden Modul (2) zugeführt wird erhöht, insbesondere stufenweise erhöht wird oder die Anzahl der rückzuspülenden Module herabgesetzt, insbesondere stufenweise herabgesetzt wird.

11. Rückspülverfahren nach mindestens einem der Ansprüche 1-10, **dadurch gekennzeichnet, dass** während des Rückspülens der Durchfluss durch das mindestens eine rückzuspülende Modul (2) erniedrigt wird, in dem die Anzahl der Module (2), die Rückspülfiltrat erzeugen, das dem mindestens einem rückzuspülenden Modul (2) zugeführt wird erniedrigt insbesondere stufenweise erniedrigt wird oder die Anzahl der rückzuspülen Module (2) heraufgesetzt, insbesondere stufenweise heraufgesetzt wird.

12. Rückspülverfahren nach mindestens einem der Ansprüche1-11, **dadurch gekennzeichnet, dass** wenn nₐ Module der Moduleinheit (4) filtrieren, n_{b} Module rückgespült werden, wobei nₐ, n_{b} einer ganzen Modulanzahl entspricht, und x die Gesamtanzahl der Module der Moduleinheit ist, und nₖ die Module die abgekoppelt sind, wobei gilt: n_{b} =x -nₐ - nₖ.

13. Rückspülverfahren nach mindestens einem der Ansprüche 1-12, **dadurch gekennzeichnet, dass** Bier, Wasser, Bier und Wasser oder CIP Medium oder Gas als Rückspülmedium verwendet wird.

14. Filtervorrichtung (1) zum Durchführen des Verfahrens nach mindestens einem der Ansprüche 1-13, mit einer oder mehreren Moduleinheiten (4), wobei eine Moduleinheit (4) mindestens ein Modulpaket (3) aufweist, das mehrere, insbesondere mindestens drei Module (2) zur Crossflow- Filtration umfasst und eine Ventileinrichtung (11) mit mehreren Ventilen, die so geschaltet werden kann, dass die Flussrichtung durch mindestens ein Modul (2) eines Modulpakets (3) zum Rückspülen umgekehrt werden kann und/oder die Module (2) abgekoppelt werden können, sowie mit
einer Steuereinrichtung, die die Ventileinrichtung (11) derart ansteuert, dass
innerhalb einer Moduleinheit (4) mindestens ein Modul (2) mit in dieser Moduleinheit (4) erzeugtem Filtrat rückgespült wird und während des Rückspülens zumindest zeitweise die Anzahl der rückgespülten Module (2) kleiner ist als die Anzahl der Module (2), die das Filtrat produzieren.
